(19) Europäisches Patentamt
European Patent Office
Office européen des brevets

(11) **EP 4 012 664 A1**

(12) **EUROPEAN PATENT APPLICATION**
published in accordance with Art. 153(4) EPC

(43) Date of publication:
**15.06.2022 Bulletin 2022/24**

(21) Application number: **20868476.1**

(22) Date of filing: **09.07.2020**

(51) International Patent Classification (IPC):
**G06T 19/00** *(2011.01)*    **G06T 7/41** *(2017.01)*

(52) Cooperative Patent Classification (CPC):
**G06T 7/41; G06T 19/00**

(86) International application number:
**PCT/JP2020/026809**

(87) International publication number:
**WO 2021/059669 (01.04.2021 Gazette 2021/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.09.2019   JP 2019174769**

(71) Applicant: **Sony Group Corporation**
**Tokyo 108-0075 (JP)**

(72) Inventors:
• **SUGANO, Hisako**
  **Tokyo 108-0075 (JP)**
• **HIROTA, Yoichi**
  **Tokyo 108-0075 (JP)**

(74) Representative: **D Young & Co LLP**
**120 Holborn**
**London EC1N 2DY (GB)**

(54) **INFORMATION PROCESSING DEVICE, VIDEO GENERATION METHOD, AND PROGRAM**

(57)    A score map generation unit (83) (image quality prediction unit) included in an information processing apparatus (10a) predicts, for a 3D model (90M) (3D object), a relationship between a position of a virtual viewpoint (V) from which the 3D model (90M) is viewed and image quality of a virtual image (J) obtained when the 3D model (90M) is viewed from the position of the virtual viewpoint (V).

FIG.11

## Description

Field

The present disclosure relates to an information processing apparatus, a video generation method, and a program, and more particularly, to an information processing apparatus, a video generation method, and a program capable of predicting the image quality of a virtual image obtained when a 3D object is captured by a virtual camera from an arbitrary direction.

Background

In the related art, there has been proposed a technique of generating a 3D object in a viewing space by using information obtained by sensing a real 3D space, for example, a multi-viewpoint video obtained by imaging a subject from different viewpoints, and generating a video that appears as if the object exists in the viewing space. Furthermore, a technique of synthesizing a virtual video obtained when the object is imaged from an arbitrary viewpoint position has been proposed (for example, Patent Literature 1).

Citation List

Patent Literature

Patent Literature 1: JP 4671873 B2

Summary

Technical Problem

However, in Patent Literature 1, the image quality of a virtual image captured from an arbitrary direction cannot be predicted.
The present disclosure proposes an information processing apparatus, a video generation method, and a program capable of predicting the image quality of a virtual image obtained when a 3D object is imaged from a virtual viewpoint.

Solution to Problem

To solve the problems described above, an information processing apparatus according to an embodiment of the present disclosure includes: an image quality prediction unit that predicts, for a 3D object, a relationship between a position of a virtual viewpoint from which a 3D object is viewed and image quality of a virtual image obtained when the 3D object is viewed from the position of the virtual viewpoint.

Brief Description of Drawings

FIG. 1 is a block diagram illustrating an example of a basic configuration of an information processing apparatus according to the first embodiment.
FIG. 2 is a diagram illustrating an outline of a flow in which a 3D model generation device generates a 3D model.
FIG. 3 is a diagram illustrating a method in which a camera path prediction device generates a virtual image obtained by imaging a single 3D model from a virtual viewpoint.
FIG. 4 is a diagram illustrating an example in which the camera path prediction device generates a virtual image obtained by imaging a single 3D model from a virtual viewpoint.
FIG. 5 is a flowchart illustrating an example of a procedure in which the camera path prediction device generates a virtual image.
FIG. 6 is a hardware block diagram illustrating an example of a hardware configuration of the information processing apparatus according to the first embodiment.
FIG. 7 is a functional block diagram illustrating an example of a functional configuration of an information processing apparatus according to the first embodiment.
FIG. 8 is a diagram for explaining a layout of a real camera that images a subject.

FIG. 9 is a diagram illustrating an example of calculating an image quality score.

FIG. 10 is a diagram illustrating an example of a layout of a real camera.

FIG. 11 is a diagram for explaining an example of generating a score map.

FIG. 12 is a diagram illustrating a method of generating a camera path.

FIG. 13 is a first diagram illustrating an example of a user interface for predicting a camera path.

FIG. 14 is a second diagram illustrating an example of a user interface for predicting a camera path.

FIG. 15 is a flowchart illustrating an example of a flow of a process performed by the camera path generation device.

FIG. 16 is a block diagram illustrating an example of a basic configuration of an information processing apparatus according to the second embodiment.

FIG. 17 is a functional block diagram illustrating an example of a functional configuration of a mobile terminal according to the second embodiment.

FIG. 18 is a diagram for explaining the operation of the mobile terminal according to the second embodiment.

FIG. 19 is a functional block diagram illustrating an example of a functional configuration of a mobile terminal according to the third embodiment.

FIG. 20 is a diagram for explaining the operation of the mobile terminal according to the third embodiment.

FIG. 21 is a functional block diagram illustrating an example of a functional configuration of a mobile terminal according to the fourth embodiment.

FIG. 22 is a functional block diagram illustrating an example of a functional configuration of a 3D model generation device according to the fifth embodiment.

FIG. 23 is a diagram for explaining the operation of the 3D model generation device according to the fifth embodiment.

Description of Embodiments

Hereinafter, the embodiments of the present disclosure will be described in detail with reference to the drawings. In the following embodiments, the same parts are denoted by the same reference signs, and a duplicate description will be omitted.

Further, the present disclosure will be described in the order of the following items.

1. First embodiment

1-1. Description of premise-generation of 3D model

1-2. Description of premise-generation of virtual viewpoint video of single 3D model

1-3. Description of hardware configuration of information processing apparatus

1-4. Description of functional configuration of information processing apparatus

1-5. Description of method of calculating image quality score

1-6. Description of method of generating score map 1-7. Description of method of generating camera path

1-8. Description of camera path generation assistance method

1-9. Description of flow of processing performed by camera path generation device

1-10. Effects of first embodiment

2. Second embodiment

3. Third embodiment

4. Fourth embodiment

5. Fifth embodiment

(1. First embodiment)

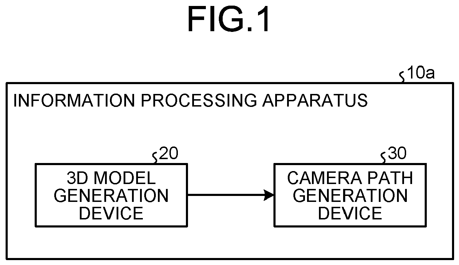

An information processing apparatus 10a according to the first embodiment of the present disclosure is an apparatus that generates a camera path that provides high image quality when 3D models of a plurality of subjects are simultaneously imaged. FIG. 1 is a block diagram illustrating an example of a basic configuration of an information processing apparatus according to the first embodiment. The information processing apparatus 10a includes a 3D model generation device 20 and a camera path generation device 30.

The 3D model generation device 20 generates 3D models of a plurality of subjects independently.

When 3D models of a plurality of subjects are disposed in the same space and the 3D models of the plurality of subjects are simultaneously imaged, the camera path generation device 30 generates, for example, a camera path capable of maintaining image quality of a predetermined value or more, that is, a movement trajectory of a virtual viewpoint.

Hereinafter, before describing details of the information processing apparatus 10a, necessary premises will be described.

[1-1. Description of premise-generation of 3D model]

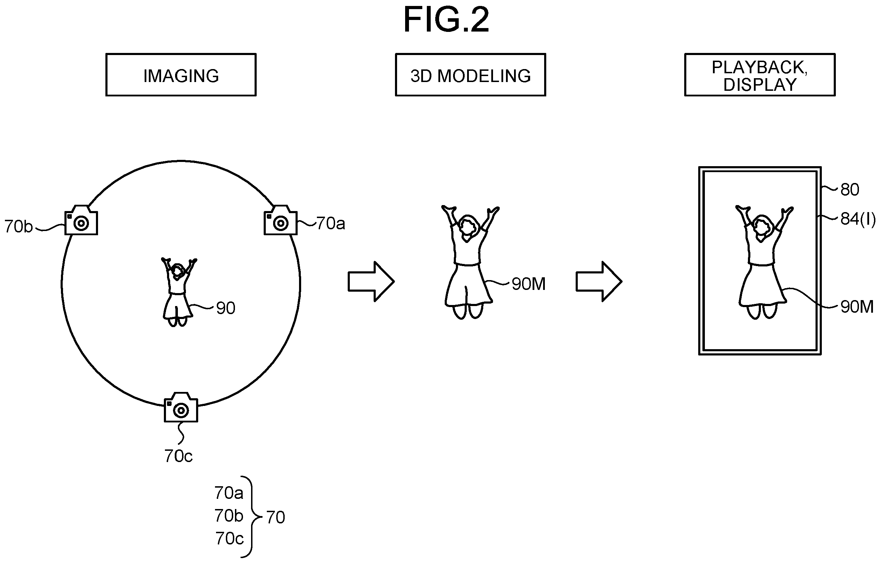

FIG. 2 is a diagram illustrating an outline of a flow in which the 3D model generation device generates a 3D model.

As illustrated in FIG. 2, the generation of the 3D model includes imaging of a subject 90 by a plurality of imaging devices 70 (70a, 70b, 70c) and the process of generating a 3D model 90M having 3D information about the subject 90 by 3D modeling.

Specifically, as illustrated in FIG. 2, the plurality of imaging devices 70 is disposed inward outside the subject 90 so as to surround the subject 90 existing in the real world. FIG. 2 illustrates an example in which the number of imaging devices is three, and the imaging devices 70a, 70b, and 70c are disposed around the subject 90. Note that, in FIG. 2, a person who performs a predetermined operation is the subject 90. Furthermore, the number of imaging devices 70 is not limited to three, and a larger number of imaging devices may be provided.

From different viewpoints, 3D modeling is performed by the three imaging devices 70a, 70b, and 70c using a plurality of viewpoint images captured by the volumetric imaging in synchronization, and the 3D model 90M of the subject 90 is generated in units of video frames of the three imaging devices 70a, 70b, and 70c.

The 3D model 90M is a model having 3D information about the subject 90. Note that the 3D model 90M is an example of a 3D object in the present disclosure. The 3D model 90M includes mesh data called polygon mesh in which geometry information about the subject 90 is expressed by connection between vertices and vertices, and texture information and depth information (distance information) corresponding to each polygon mesh. Note that the information included in the 3D model 90M is not limited thereto, and may include other information. Note that the depth information about the subject 90 is calculated based on, for example, parallax of the same region of the subject 90 detected from an image captured by an adjacent imaging device. Note that the depth information may be obtained by installing a sensor including a distance measuring mechanism in the vicinity of the imaging device and measuring the distance to the subject 90 by the sensor.

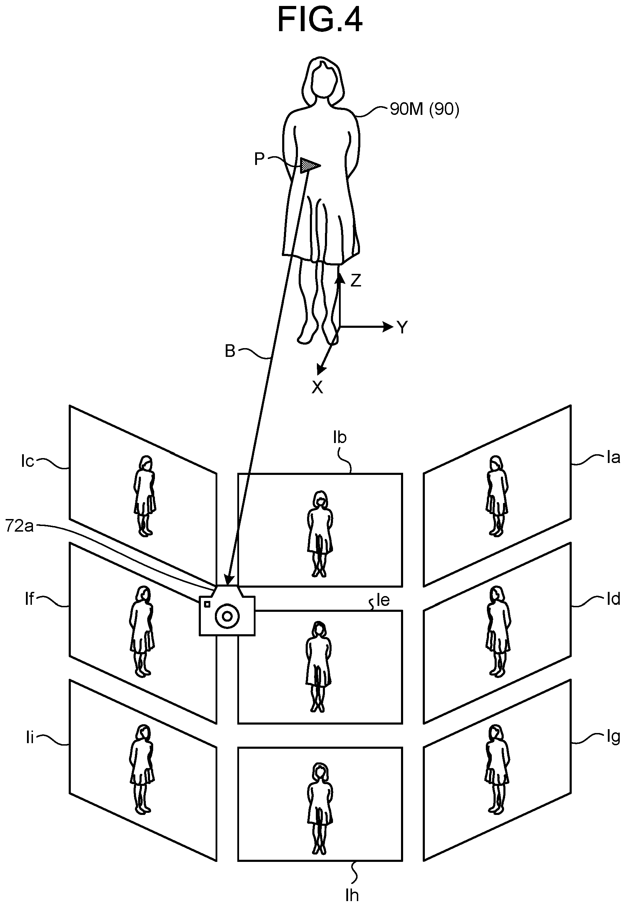

The 3D model 90M is subjected to so-called texture mapping in which a texture indicating the color, pattern, or texture of the mesh is pasted according to the mesh position. In the texture mapping, it is desirable to paste a view dependent texture in order to improve the reality of the 3D model 90M. As a result, when the 3D model 90M is imaged from an arbitrary virtual viewpoint, the texture changes according to the viewpoint position, so that a virtual image with higher image quality can be obtained (see FIG. 4). However, since the amount of calculation increases, a view independent texture may be attached to the 3D model 90M.

The content data including the read 3D model 90M is transmitted to the device on the playback side and played back. The content data including the 3D model 90M is played back, and the 3D model 90M is rendered, whereby the 3D shape video is displayed on the viewing device of the viewer.

In the example of FIG. 2, a mobile terminal 80 such as a smartphone or a tablet terminal is used as the viewing device. That is, the image including the 3D model 90M is displayed on a display screen 84 of the mobile terminal 80.

[1-2. Description of premise-generation of virtual viewpoint video of single 3D model]

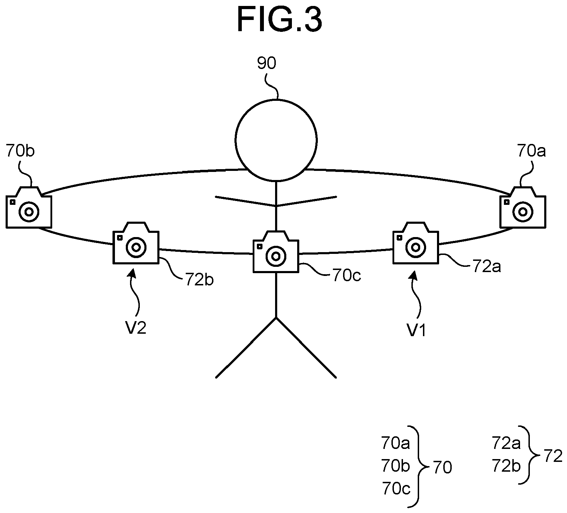

FIG. 3 is a diagram illustrating a method in which a camera path generation device generates a virtual image obtained by imaging a single 3D model from a virtual viewpoint. In FIG. 3, an imaging device 70 (70a, 70b, 70c) is an imaging device used to create the 3D model 90M of the subject 90. Hereinafter, the imaging device 70 (70a, 70b, 70c) is referred to as a real camera 70. Note that the real camera 70 is an example of an imaging unit in the present disclosure. In various applications using the 3D model 90M, it is desirable that the generated 3D model 90M can be imaged from various directions. Therefore, the technology that generates an image (virtual image) obtained by imaging the 3D model 90M from a position (virtual viewpoint) different from that of the real camera 70 has been developed.

For example, in FIG. 3, it is assumed that a virtual image J1 (not illustrated) obtained when the virtual camera 72a placed at a virtual viewpoint V1 captures an image of the 3D model 90M is generated. The virtual image J1 can be generated by interpolating images of the 3D model 90M captured by the real camera 70a and the real camera 70c placed in the vicinity of the virtual camera 72a. That is, the depth information about the subject 90 is calculated by associating the image of the 3D model 90M captured by the real camera 70a with the image of the 3D model 90M captured by the real camera 70c. Then, by projecting the texture of the region corresponding to the calculated depth information onto the virtual camera 72a, the virtual image J1 of the 3D model 90M (subject 90) viewed from the virtual camera 72a can be generated.

Similarly, a virtual image J2 (not illustrated) of the 3D model 90M viewed from the virtual camera 72b placed at a virtual viewpoint V2 in the vicinity of the real camera 70b and the real camera 70c can be generated by interpolating the image of the 3D model 90M captured by the real camera 70b and the image of the 3D model 90M captured by the real camera 70c. Note that, hereinafter, the virtual cameras 72a and 72b are collectively referred to as a virtual camera 72. Furthermore, the virtual viewpoints V1 and V2 are collectively referred to as a virtual viewpoint V, and the virtual images J1 and J2 are collectively referred to as a virtual image J (not illustrated).

Since the virtual image J obtained in this manner is an image generated by interpolation, the image quality deteriorates as compared with the image of the 3D model 90M captured by the real camera 70.

That is, the image quality of the virtual image J obtained when the virtual camera 72 is moved around the 3D model 90M is the best when the virtual camera 72 is placed at the same position as the real camera 70 and captures an image under the same conditions as the real camera 70. On the other hand, the image quality of the virtual image J generated when the virtual camera 72 is placed at a position away from the real camera 70 is lower than the image quality of the image captured by the real camera 70.

At this time, the degree of deterioration in image quality is determined by the arrangement position and the optical parameters of the virtual camera 72 and the arrangement position and the optical parameters of the real camera 70, and in general, the larger the difference between them, the larger the deterioration in image quality.

Next, an example of generating the virtual image J will be described with reference to FIG. 4. FIG. 4 is a diagram illustrating an example in which the camera path generation device generates a virtual image obtained by imaging a single 3D model from a virtual viewpoint.

It is assumed that the subject 90 is imaged by the nine real cameras 70 from different directions to generate the 3D model 90M. As a result, it is assumed that nine images Ia to Ig illustrated in FIG. 4 are captured by the respective real cameras 70. At this time, a method of generating the virtual image Ja of the 3D model 90M captured by the virtual camera 72a placed at the position illustrated in FIG. 4 will be described.

In order to simplify the description, a case where a virtual image of a polygon P of the 3D model 90M is generated will be described as an example. Note that it is assumed that the 3D model 90M is placed at a known position in the world coordinate system XYZ set arbitrarily.

First, a positional relationship between the 3D model 90M and the virtual camera 72a is obtained. Note that the arrangement position (Xv, Yv, Zv) of the virtual camera 72a, that is, the virtual viewpoint is assumed to be known. Since the position of the polygon P of the 3D model 90M in the world coordinate system XYZ is known, the positional relationship between the polygon P and the virtual camera 72a, that is, a vector B illustrated in FIG. 4 is uniquely determined.

Next, for each of the nine images Ia to Ig, an image candidate to be used in generating the virtual image is selected. Specifically, it is determined whether the polygon P is shown in each of the images Ia to Ig. Whether the polygon P is shown may be determined based on the determination of whether the occlusion occurs and the determination of whether the depth information about the region corresponding to the polygon P of each image matches the actual depth. In the example of FIG. 4, it is assumed that six images Ib, Ic, Ie, If, Ih, and Ii include the polygon P. On the other hand, it is assumed that the polygon P is not shown in the images Ia, Id, and Ig.

Next, the position of each of the real cameras 70 that has captured the image candidate used when the virtual image is generated is compared with the position of the virtual camera 72a, and the real cameras 70 are sorted in order of proximity to the virtual camera 72a.

Various scales can be used to determine the closeness between the real camera 70 and the virtual camera 72a. For example, it may be determined that the real camera 70 and the virtual camera 72a are closer as an angle formed by a line segment connecting the polygon P shown in the image captured by each real camera 70 and the polygon P of the 3D model 90M and the vector B is smaller.

Furthermore, it may be determined that as the distance between the real camera 70 and the virtual camera 72a decreases, the real camera 70 and the virtual camera 72a are closer.

Furthermore, it may be determined that the real camera 70 and the virtual camera 72a are closer as the imaging magnification of the polygon P is closer. Specifically, it may be determined that as an image size p of the subject 90 calculated by Expression (1) from a subject size h of the subject 90, a distance D from each camera to the subject 90, and the focal distance f of the lens used for imaging is closer, the real camera 70 and the virtual camera 72a are closer.

$$p = h * (f/D) \qquad\qquad (1)$$

Furthermore, the user himself/herself may select the real camera 70 close to the virtual camera 72a.

Next, weights are given to the respective real cameras 70 in the order of proximity from the virtual camera 72a, and a texture blended based on the given weights is mapped and rendered on the virtual image J. As a result, the virtual image J of the polygon P viewed from the virtual camera 72a is generated. Note that the virtual image J of the 3D model 90M viewed from the virtual camera 72a can be generated by performing a similar process on a plurality of polygons of the 3D model 90M.

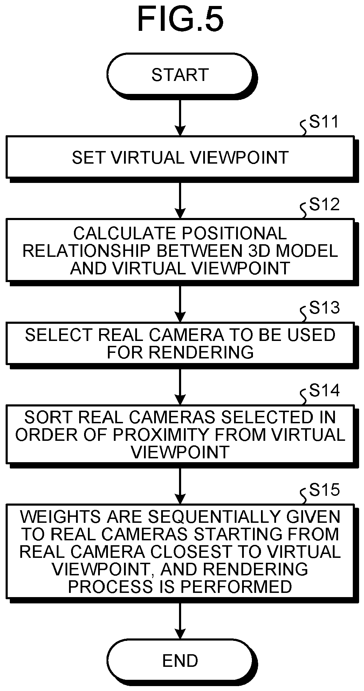

Hereinafter, a method of creating the virtual image J will be described based on a flowchart with reference to FIG. 5. FIG. 5 is a flowchart illustrating an example of a procedure in which the camera path generation device generates a virtual image.

First, the virtual viewpoint V for imaging the 3D model 90M is set (step S11).

Next, a positional relationship between the 3D model 90M and the virtual viewpoint V is calculated (step S12) .

Further, the real camera 70 to be used for rendering is selected (step S13).

Next, the real cameras 70 selected in step S13 are sorted in the order of proximity from the virtual viewpoint V (step S14).

Then, weights are sequentially given to the respective real cameras starting from the real camera 70 closest to the virtual viewpoint V, and a rendering process is performed (step S15).

[1-3. Description of hardware configuration of information processing apparatus]

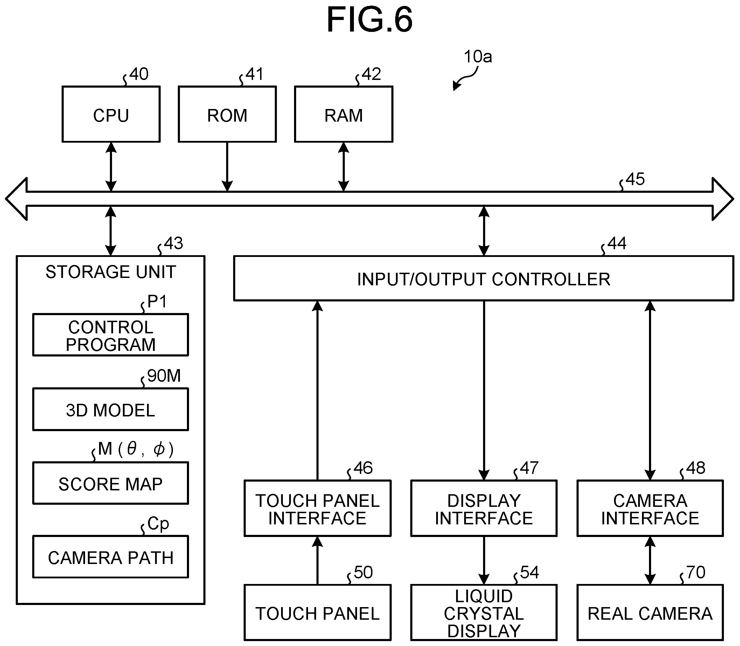

FIG. 6 is a hardware block diagram illustrating an example of a hardware configuration of the information processing apparatus according to the first embodiment.

The information processing apparatus 10a has a configuration in which a central processing unit (CPU) 40, a read only memory (ROM) 41, a random access memory (RAM) 42, a storage unit 43, and an input/output controller 44 are connected by an internal bus 45.

The CPU 40 develops and executes a control program P1 stored in the storage unit 43 and various data files such as camera parameters stored in the ROM 41 on the RAM 42, thereby controlling the overall operation of the information processing apparatus 10a. That is, the information processing apparatus 10a has a configuration of a general computer that operates by the control program P1. Note that the control program P1 may be provided via a wired or wireless transmission medium such as a local area network, the Internet, or digital satellite broadcasting. Furthermore, the information processing apparatus 10a may execute a series of processes by hardware. Note that the control program P1 executed by the CPU 40 may be a program in which processing is performed in time series in the order described in the present disclosure, or may be a program in which processing is performed in parallel or at necessary timing such as when a call is made.

The storage unit 43 includes, for example, a flash memory to store the control program P1 executed by the CPU 40 and the 3D model 90M. Note that, since the 3D model 90M generally has a large capacity, the 3D model may be downloaded from an external server (not illustrated) connected to the information processing apparatus 10a via the Internet or the like as necessary and stored in the storage unit 43.

The storage unit 43 further stores a score map $M(\theta, \phi)$ and a camera path Cp. The score map $M(\theta, \phi)$ is a map obtained by quantifying parameters related to the image quality of the virtual image J obtained by imaging the 3D model 90M with the virtual camera 72. The score map $M(\theta, \phi)$ is generated for each 3D model 90M. The score map $M(\theta, \phi)$ will be described later in detail. Note that the score map $M(\theta, \phi)$ is an example of a map in the present disclosure. The camera path Cp stores, for example, a camera path Cp that is generated based on the score map $M(\theta, \phi)$ and is a movement trajectory of the virtual viewpoint when the virtual camera 72 is moved while maintaining the image quality of a predetermined value or more. The camera path Cp will be described in detail later.

The input/output controller 44 acquires, via a touch panel interface 46, information for operating a touch panel 50 stacked on a liquid crystal display 54 that displays information related to the information processing apparatus 10a. The input/output controller 44 displays image information on the liquid crystal display 54 via a display interface 47. Furthermore, the input/output controller 44 controls the operation of the real camera 70 via a camera interface 48.

Furthermore, although not illustrated in FIG. 6, the input/output controller 44 communicates with an external server (not illustrated) or the like by wireless communication or wired communication. As a result, the information processing apparatus 10a receives, for example, the 3D model 90M created at another place.

[1-4. Description of functional configuration of information processing apparatus]

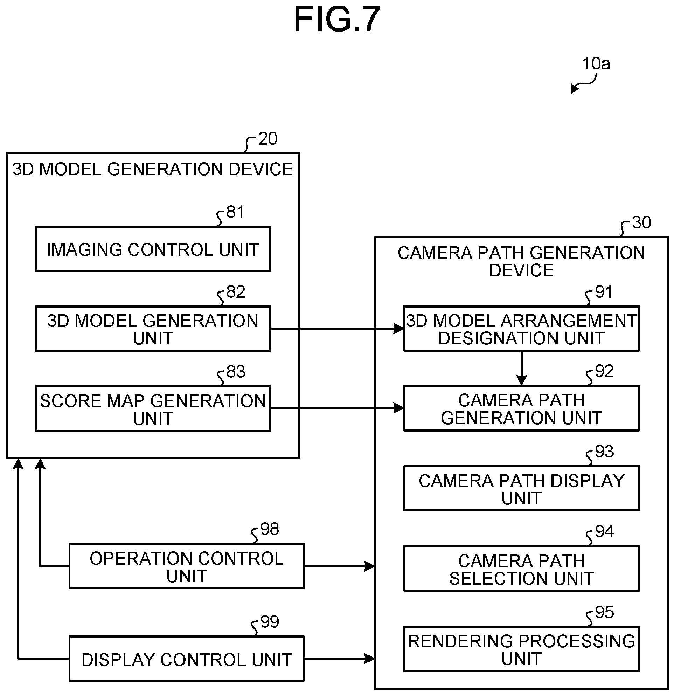

FIG. 7 is a functional block diagram illustrating an example of a functional configuration of an information processing apparatus according to the first embodiment. The CPU 40 of the information processing apparatus 10a develops the control program P1 on the RAM 42 and operates the control program P1 to implement each functional unit illustrated in FIG. 7.

That is, the CPU 40 of the information processing apparatus 10a implements functions of an imaging control unit 81, a 3D model generation unit 82, and a score map generation unit 83 as the 3D model generation device 20.

The imaging control unit 81 images the subject 90 by controlling the operation of the real camera 70.

The 3D model generation unit 82 generates the 3D model 90M of the subject 90 based on the image of the subject 90 captured by the imaging control unit 81.

The score map generation unit 83 predicts, for the 3D model 90M, the relationship between the position of the virtual viewpoint from which the 3D model 90M is viewed and the image quality of the virtual image J obtained when the 3D model 90M is viewed from the position of the virtual viewpoint. Then, the score map generation unit 83 generates a score map M(θ, φ) visualizing the estimated image quality of the virtual image J. Note that the score map generation unit 83 is an example of an image quality prediction unit in the present disclosure. A specific method of generating the score map M(θ, φ) will be described later.

Furthermore, the CPU 40 of the information processing apparatus 10a implements, as the camera path generation device 30, functions of a 3D model arrangement designation unit 91, a camera path generation unit 92, a camera path display unit 93, a camera path selection unit 94, and a rendering processing unit 95.

The 3D model arrangement designation unit 91 designates the arrangement positions of the plurality of 3D models 90M in the same space. Specifically, an operation control unit 98 designates the arrangement position in the three-dimensional space.

The camera path generation unit 92 generates the camera path Cp, which is the movement trajectory of the virtual viewpoint V, based on the arrangement positions of the plurality of 3D models 90M designated by the 3D model arrangement designation unit 91 and the score map M(θ, φ) generated by the score map generation unit 83 for each of the 3D models 90M. Various conditions for generating the camera path Cp are conceivable. For example, the camera path Cp that can maintain image quality equal to or higher than a predetermined value as much as possible may be generated. Furthermore, the camera path Cp may be generated so as to avoid a virtual viewpoint with coarse image quality, or the camera path set by the user may be changed to the camera path Cp with which higher image quality can be obtained. Note that the camera path generation unit 92 is an example of a movement trajectory generation unit in the present disclosure. A specific method of generating the camera path Cp will be described later.

The camera path display unit 93 displays on the liquid crystal display 54 the camera path Cp generated by the camera path generation unit 92.

The camera path selection unit 94 selects the camera path Cp designated by the operator from among the plurality of camera paths Cp generated by the camera path generation unit 92.

The rendering processing unit 95 performs rendering of the plurality of 3D models 90M viewed from the virtual viewpoint V while moving the virtual viewpoint V along the camera path Cp selected by the camera path selection unit 94, and generates the virtual image J.

Furthermore, the CPU 40 of the information processing apparatus 10a realizes an operation control unit 98 as a function of performing operation control when operating the 3D model generation device 20 and the camera path generation device 30. Furthermore, it realize a display control unit 99 as a function of performing display control to display information related to the 3D model generation device 20 and the camera path generation device 30.

The operation control unit 98 controls the touch panel 50 to acquire an operation instruction related to the 3D model generation device 20 and the camera path generation device 30 of the operator, and delivers the operation instruction to a related functional unit.

The display control unit 99 controls the liquid crystal display 54 to perform display in accordance with the display instruction of various types of information from the 3D model generation device 20 and the camera path generation device 30.

[1-5. Description of method of calculating image quality score]

Next, the score map M(θ, φ) used by the information processing apparatus 10a of the present embodiment will be described. The score map M(θ, φ) is a map that quantifies the image quality of the virtual image J when the 3D model 90M is viewed for each direction in which the subject 90 is viewed, and that is generated simultaneously when the 3D model generation device 20 creates the 3D model 90M.

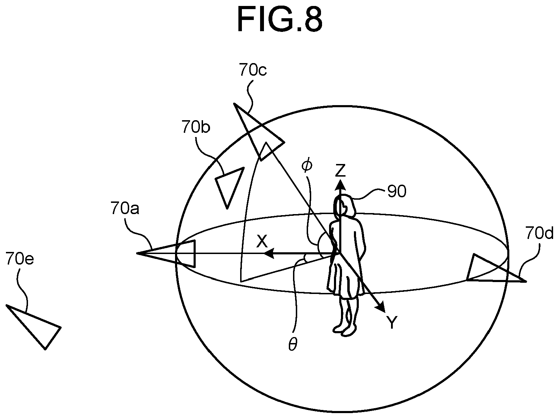

FIG. 8 is a diagram illustrating a layout of a real camera that captures an image of a subject. When the 3D model 90M of the subject 90 is created, the plurality of real cameras 70 is disposed so as to surround the subject 90. The respective real cameras 70 generally have different optical parameters (lens focal distance, number of pixels, sensor size, and the like) of the camera and different formats (HD (High Definition), full HD, 4K, 8K, and the like) of a video to be captured.

In the example of FIG. 8, five real cameras 70 (70a, 70b, 70c, 70d, 70e) are disposed around the subject 90. Note that the direction of the real camera 70 on the XY plane is represented by an angle θ. Furthermore, the direction of the real camera 70 on the XZ plane is represented by an angle φ. That is, the arrangement position of the real camera 70 is specified by coordinates (θ, φ).

The real camera 70a is disposed on the XY plane in the front direction of the subject 90 so as to face the front of the subject 90. The real camera 70b is disposed facing the front of the subject 90 from slightly above the subject 90. Note that, in FIG. 8, the angle of view of the camera is represented by the apex angle of an isosceles triangle, indicating that the real camera 70b has a wideangle lens and has a wider angle of view than other real cameras. The real camera 70c is disposed in a direction looking down the front of the subject 90 from above the subject 90.

Further, the real camera 70d is disposed on the back face side of the subject 90 so as to face the back face of the subject 90. The real camera 70e is disposed in a direction in which the subject 90 is out of the field of view. Note that it is assumed that the real camera 70a to the real camera 70d are disposed at positions substantially equidistant from the subject 90, and the real camera 70e is disposed farther away.

A camera path generation device 10 generates a score map M(θ, φ) visualizing the image quality of the image of the subject 90 captured by each real camera 70. Hereinafter, a method of quantifying the image quality of an image and a procedure of generating the score map M(θ, φ) will be sequentially described.

First, the information processing apparatus 10a predicts an image quality score Iq of an image captured by each of the real cameras 70a to 70e. It is assumed that the image quality score Iq is calculated by, for example, Expression (2).

$$Iq = e * (p/s) * visibility * weight \qquad (2)$$

In Expression (2), e represents the resolution (the number of pixels) of the real camera 70. For example, in the case of the real camera 70 with full HD image quality, e = 1920 (horizontal) × 1080 (vertical) pixels. Furthermore, in the case of the real camera 70 with 4K image quality, e = 3840 (horizontal) × 2160 (vertical) pixels. In addition, p in Expression (2) is the image size of the subject 90 calculated by Expression (1) described above. Furthermore, s is the size of the image sensor included in the real camera 70. For example, in the case of a full-size image sensor, s = 36.0 (horizontal) × 24.0 (vertical) mm, and in the case of an APS-C size image sensor, s = 23.6 (horizontal) × 15.8 (vertical) mm. That is, (p/s) in Expression (2) indicates a ratio of the subject 90 in the image captured by the real camera 70. Then, e * (p/s) in Expression (2) represents the number of pixels of the image of the subject 90 to be captured. That is, the larger the value of e * (p/s), the higher the image quality score Iq. In this manner, the information processing apparatus 10a predicts the image quality of the virtual image J based on the optical parameters of the real camera 70 (imaging unit) used when generating the 3D model 90M(3D object) and the distance D between the real camera 70 and the 3D model 90M.

Visibility in Expression (2) is information indicating whether the subject 90 (3D model 90M) is shown in the image, that is, whether the real camera 70 captures the subject 90. For example, in a case where the subject 90 is captured, Visibility = 1, and in a case where the subject 90 is not captured, Visibility = 0. Weight is an arbitrarily set weight. For example, in a case where the real camera 70 is located in front of the subject 90, that is, in a case where the subject 90 is captured from the front, weight = 1.0 is set, and in other cases, weight = 0.5 is set. Note that the formula for calculating the image quality score Iq is not limited to Expression (2), and other parameters may be considered. For example, when the subject 90 is blurred, the image quality score Iq may be subtracted according to the degree of blurring.

The image quality score Iq calculated by Expression (2) has a larger value when the real camera 70 largely captures the subject 90 (3D model 90M) from the front, that is, when the subject 90 is imaged so as to shown fully on the screen from the front.

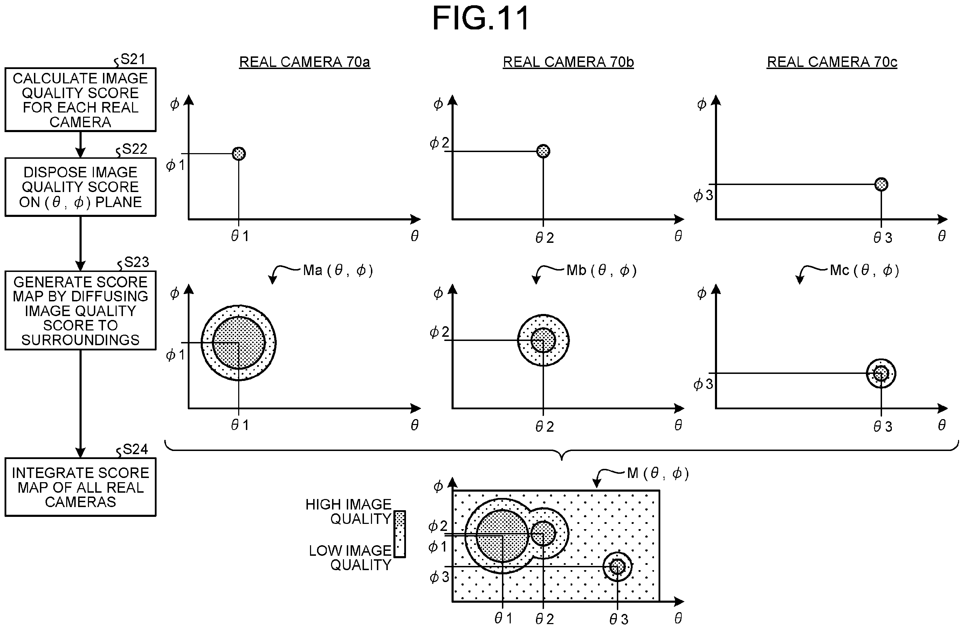

The 3D model generation device 20 disposes the image quality score Iq calculated by Expression (2) in a space (θ, φ) corresponding to the arrangement position of the real camera 70, thereby generating the score map M(θ, φ) for each direction in which the 3D model 90M (3D object) is viewed. Details will be described later (see FIG. 11).

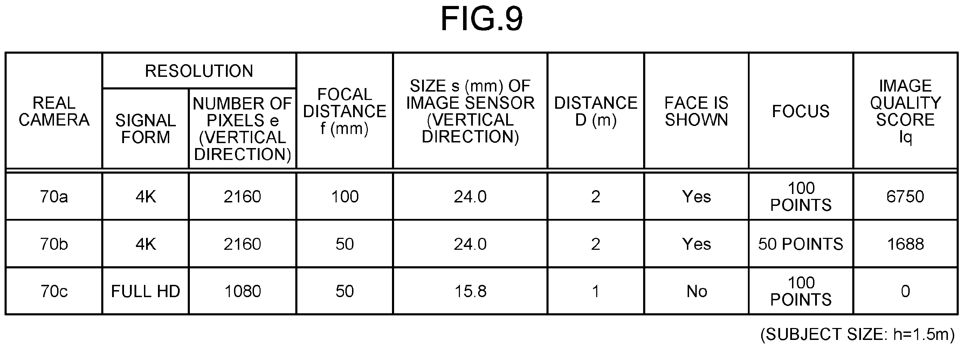

Next, a specific calculation example of the image quality score Iq will be described with reference to FIG. 9. FIG. 9 is a diagram illustrating an example of calculating an image quality score. Specifically, FIG. 9 illustrates an example in which the image quality score Iq is calculated by the above Expressions (1) and (2) with the height of the subject 90 set to h = 1.5 m. Note that the number of pixels e and the size s of the image sensor are values in the vertical direction corresponding to the height direction of the subject 90.

Note that, in a case where the face of the subject 90 is not shown in the image captured by the real camera 70, the image quality score Iq is set to 0. Further, a focus is evaluated on the captured image with of 100 points at the time of the focus point. Then, for example, in a case where the evaluation point is 50 points, the image quality score Iq is multiplied by 0.5.

As illustrated in FIG. 9, although the real cameras 70a, 70b, and 70c have different resolutions and different imaging conditions, by using Expressions (1) and (2), the image quality of the captured images can be compared on an equal footing.

[1-6. Description of method of generating score map]

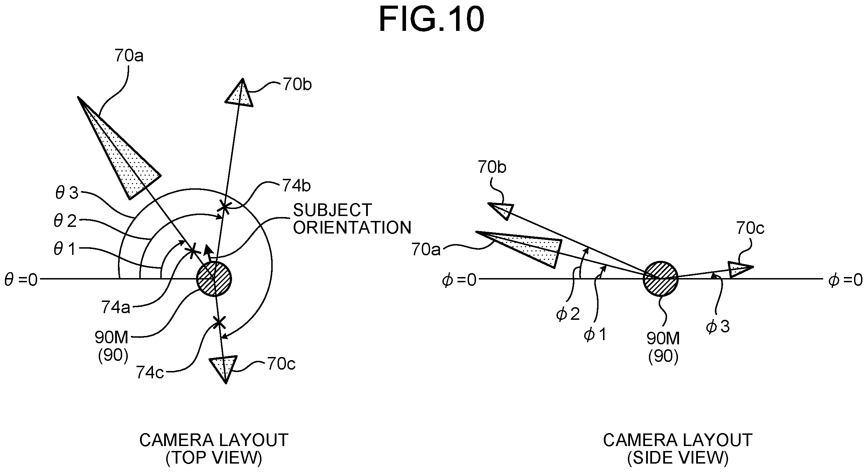

Next, a procedure of generating the score map M(θ, φ) visualizing the image quality score Iq will be described with reference to FIGS. 10 and 11. FIG. 10 is a diagram illustrating an example of a layout of a real camera. FIG. 11 is a diagram illustrating an example of generating a score map.

As an example, as illustrated in FIG. 10, it is assumed that three real cameras 70a, 70b, and 70c are disposed around the 3D model 90M (subject 90). Specifically, in top view, the real camera 70a is disposed in a direction of θ = θ1 with respect to the reference direction of the angle θ. The real camera 70b is disposed in a direction of θ = θ2. The real camera 70c is disposed in a direction of θ = θ3. Note that the 3D model 90M faces the direction of the real cameras 70a and 70b. That is, the real cameras 70a and 70b image the 3D model 90M from the front direction. On the other hand, the real camera 70c is disposed facing the back side of the 3D model 90M. Note that the real camera 70a includes a lens having a longer focal distance f than the real cameras 70b and 70c.

Furthermore, it is assumed that the real cameras 70a, 70b, and 70c are disposed at positions looking down on the 3D model 90M (subject 90) from obliquely above as illustrated in FIG. 10. Specifically, in the side view, the real camera 70a is disposed in a direction of $\phi = \phi1$ with respect to the reference direction of the angle $\phi$. The real camera 70b is disposed in a direction of $\phi = \phi2$. Then, the real camera 70c is disposed in a direction of $\phi = \phi3$.

In a case where the image quality of the image captured by the real camera 70 at the position of the angle $\theta$ and the distance D from the 3D model 90M is good, in a case where the virtual camera 72a is brought close to the 3D model 90M in a state where the angle $\theta$ is maintained, the 3D model 90M is in a state of being imaged in a further enlarged manner, and thus, the image quality of the image captured by the real camera 70a is maintained even when the real camera is close to the position where the 3D model 90M can be imaged on the full screen. Then, when the virtual camera 72a is brought close to the 3D model 90M beyond the nearest point 74a (see FIG. 10), the 3D model 90M is framed-out, and thus the 3D model 90M cannot be imaged, that is, the image quality of the image captured by the real camera 70a is not maintained. On the other hand, in a case where the virtual camera 72a is moved away from the position of the real camera 70a while maintaining the angle $\theta$, assuming that the focal distance f of the virtual camera 72a and the focal distance f of the real camera 70a are the same, the 3D model 90M is captured simply small, and thus the image quality of the image captured by the real camera 70a is maintained.

Similarly, the image quality of the image of the 3D model 90M captured by the real cameras 70b and 70c is maintained far from the nearest points 74b and 74c illustrated in FIG. 10. Note that the specific positions of the nearest points 74a, 74b, and 74c can be calculated based on the imaging conditions of the real cameras 70a, 70b, and 70c, specifically, the imaging magnification of the 3D model 90M.

The score map generation unit 83 (see FIG. 7) creates a score map $M(\theta, \phi)$ visualizing the image quality scores Iq of the images captured by the real cameras 70a, 70b, and 70c disposed in such a positional relationship, according to the flowchart illustrated in FIG. 11.

First, the score map generation unit 83 calculates the image quality score Iq for each of the real cameras 70a, 70b, and 70c (step S21). Note that the calculation procedure of the image quality score Iq is as described above.

Next, the score map generation unit 83 plots the calculated image quality score Iq on the $(\theta, \phi)$ plane (step S22). An example in which the image quality score Iq is actually plotted is illustrated in the upper part of FIG. 11. On the $(\theta, \phi)$ plane, the values of the image quality scores Iq are plotted at the respective positions of the coordinates $(\theta1, \Phi1)$, $(\theta2, \phi2)$, and $(\theta3, \phi3)$ corresponding to the arrangement positions of the real cameras 70a, 70b, and 70c.

Next, the score map generation unit 83 generates the score map for each real camera 70 by diffusing the value of the image quality score Iq plotted on the $(\theta, \phi)$ plane around the $(\theta, \phi)$ plane (step S23).

In a case where the virtual camera 72 is disposed in the vicinity of the real camera 70, when the angle difference between the virtual camera 72 and the real camera 70 is small and the virtual camera 72 captures the 3D model 90M in the image, the value of the image quality score Iq can be regarded to be substantially equal. Therefore, even when there is a slight angle difference between the real camera 70 and the virtual camera 72 in the score map for each real camera 70, the plotted image quality score Iq is diffused to the surroundings so as to allow the difference.

Specifically, the image quality score Iq may be diffused on the $(\theta, \phi)$ plane to the surroundings by performing a smoothing operation. For the smoothing operation, for example, a known Gaussian filter may be used. By diffusing the image quality score Iq to the surroundings, a chevron score distribution centered on the arrangement position of each real camera 70 is obtained as illustrated in the middle part of FIG. 11. Note that FIG. 11 illustrates that discrete values are distributed for easy viewing, but actually forms a unimodal distribution in which continuous values are stored. That is, the image quality score Iq has a distribution in which the value is the highest at the installation position of the real camera 70 and monotonically decreases as the distance from the installation position of the real camera 70 increases.

Note that the size of the filter to be operated when the smoothing operation is performed may be changed according to the value of the image quality score Iq. That is, in a case where the image quality score Iq is high, it is considered that high image quality can be maintained even if the angle difference between the real camera 70 and the virtual camera 72 is somewhat large. Therefore, it is desirable to apply a smoothing filter having a large filter size. In this case, the smoothed image quality score Iq forms a gentle unimodal distribution.

Conversely, in a case where the image quality score Iq is low, when the angle difference between the real camera 70 and the virtual camera 72 increases, it is expected that the image quality rapidly decreases. Therefore, it is desirable to apply a smoothing filter having a small filter size. In this case, the smoothed image quality score Iq forms a steep unimodal distribution.

Then, the score map generation unit 83 integrates the score maps for the respective real cameras 70a, 70b, and 70c into one score map $M(\theta, \phi)$ (step S24). When integrating the score maps of the real cameras 70a, 70b, and 70c, in a case where the plurality of real cameras 70 has the image quality score Iq at the same coordinates $(\theta, \phi)$, the maximum value thereof is stored in the score map $M(\theta, \phi)$.

Note that the score map M($\theta$, $\phi$) is not limited to one plotted on the above-described ($\theta$, $\phi$) plane. That is, the image quality score Iq according to the distance between the real camera 70 and the 3D model 90M may be plotted. Furthermore, the image quality score Iq according to the focal distance f of the real camera 70 may be plotted. Furthermore, the image quality score Iq corresponding to the resolution of the real camera 70 may be plotted. Furthermore, the image quality score Iq corresponding to the size of the 3D model 90M captured by the real camera 70 may be plotted.

Furthermore, the score map generation unit 83 may further generate a map that stores the distances between the nearest points 74a, 74b, and 74c and the 3D model 90M.

[1-7. Description of method of generating camera path]

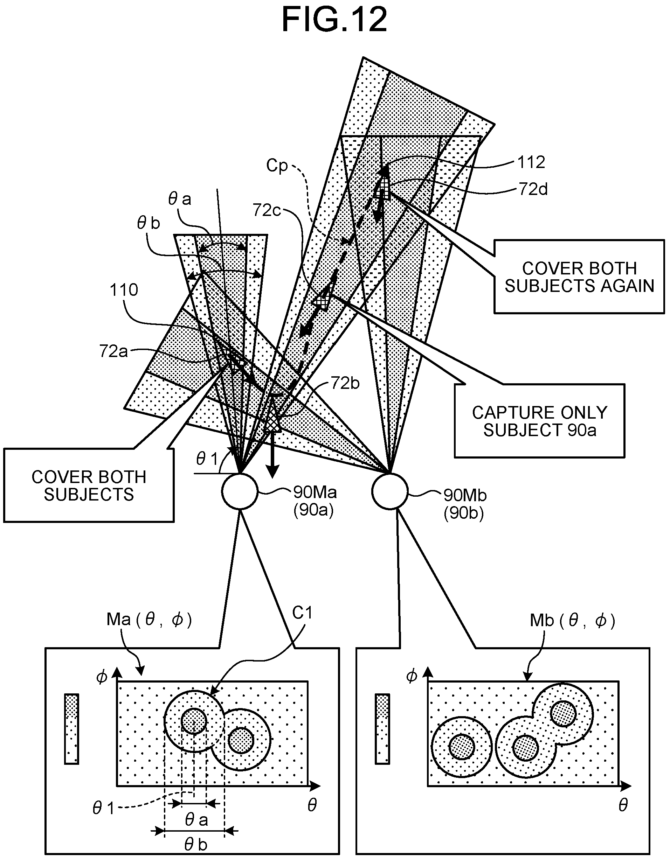

Next, a method of generating the camera path Cp will be described with reference to FIG. 12. FIG. 12 is a diagram illustrating a method of generating a camera path.

In a case where a plurality of 3D models 90M is disposed in the same space, the camera path generation unit 92 generates a camera path Cp that is a movement trajectory of the virtual viewpoint V and can maintain image quality of a predetermined value or more as much as possible, for example, when the plurality of 3D models 90M is imaged.

FIG. 12 is a top view illustrating a state in which two 3D models 90Ma (subject 90a) and 90Mb (subject 90b) are disposed in the same space.

Note that, it is assumed that the score maps Ma($\theta$, $\phi$) and Mb($\theta$, $\phi$) for the 3D models 90Ma and 90Mb have already been generated as illustrated in FIG. 12.

First, the camera path generation unit 92 refers to the score maps Ma($\theta$, $\phi$) and Mb($\theta$, $\phi$), which are image quality prediction results, and reconstructs, in a three-dimensional space, a region in which the virtual camera 72 is estimated to be able to capture the 3D models 90Ma and 90Mb with high image quality.

For example, attention is paid to the cluster C1 predicted to be able to obtain high image quality in the score map Ma($\theta$, $\phi$) for the 3D model 90Ma. In the cluster C1, a region with particularly high image quality is distributed in the angular range $\theta$a centered on the angle $\theta$ = $\theta$1. In addition, a region estimated to have high image quality is distributed in the angular range $\theta$b centered on the angle $\theta$ = $\theta$1.

That is, the region with particularly high image quality is reconstructed as a conical region extending in the direction of the angle $\theta$1 from the position of the 3D model 90Ma and having a spread of the angular range $\theta$a. Similarly, the region estimated to have high image quality is reconstructed as a conical region extending in the direction of the angle $\theta$1 from the position of the 3D model 90Ma and having a spread of the angular range $\theta$b.

Similarly, for other clusters in the score maps Ma($\theta$, $\phi$) and Mb($\theta$, $\phi$), a region estimated to have high image quality can be reconstructed to a three-dimensional space. Note that, in practice, the conical region is reconstructed in the three-dimensional space in consideration of the $\phi$ direction, but the description will be made only in the $\theta$ direction for the sake of simplicity.

With reference to the reconstruction result illustrated in FIG. 12, the camera path generation unit 92 generates the camera path Cp on condition that the camera path Cp passes through a region with as high image quality as possible for a long time. Note that the camera path generation unit 92 considers, as a constraint condition, that the camera path is not brought closer to a position closer than the nearest point described above.

Note that, since the camera path Cp can be generated infinitely, it is desirable to first indicate the start point of the camera path Cp or the start point and the end point of the camera path Cp.

FIG. 12 illustrates an example in which the camera path Cp is generated when the start point 110 and the end point 112 of the camera path Cp are designated. The camera path Cp desirably passes through a region where both of the plurality of 3D models 90Ma (subject 90a) and 90Mb (subject 90b) are estimated to be able to be imaged with high image quality. Therefore, as illustrated in FIG. 12, the start point 110 and the end point 112 are set to regions in which both the plurality of 3D models 90Ma and 90Mb are estimated to be able to be imaged with high image quality. Note that the start point 110 and the end point 112 may be set by the operator of the information processing apparatus 10a using the touch panel 50 while viewing the reconstruction result of the high image quality region displayed on the liquid crystal display 54.

Then, the camera path generation unit 92 searches for the camera path Cp from the set start point 110 to the end point 112 while tracing the position where the image quality score Iq is as high as possible. Note that the camera path generation unit 92 also sets the orientation of the virtual camera 72 at each point through which the camera path Cp passes. The orientation of the virtual camera 72 is set so that all the 3D models 90Ma and 90Mb can be imaged together. When all the 3D models 90Ma and 90Mb cannot be imaged, only part of the subject 90a may be captured as in the virtual camera 72c in FIG. 12.

In this manner, the camera path generation unit 92 generates the camera path Cp from the virtual camera 72a installed at the start point 110 to reach the virtual camera 72d installed at the end point 112 in the order of the virtual camera 72b and the virtual camera 72c.

When the camera path Cp is searched for, for example, a known dynamic programming method can be applied.

That is, the camera path Cp in which the sum of the weights of the camera paths Cp from the start point 110 to the end point 112 is minimized may be generated by weighting each of the plurality of candidates of the camera path Cp searched for in the minute region.

The camera path generation unit 92 may further set the movement speed of the virtual camera 72. Specifically, the virtual camera 72 may be moved slowly when placed in a region with high image quality, and may be moved quickly when placed in a region with low image quality.

Furthermore, in a case where the camera path Cp has to pass through a region having a low image quality score lq, the camera path generation unit 92 may set the virtual camera 72 not to face the direction of the 3D model 90M.

Further, when the camera path Cp is generated, an adjustment may be made to the score map $M(\theta, \phi)$ so that the camera path Cp is easily generated. For example, a weight may be added to the score map $M(\theta, \phi)$ to correct the image quality score lq of the 3D model 90M of the subject 90 of interest as a high direction. This makes it possible to generate the camera path Cp that preferentially passes through a region where the 3D model 90M can be imaged with higher image quality.

Furthermore, in consideration of the resolution of the real camera 70, the image quality score lq when captured by the real camera 70 having a high resolution may be corrected as a high direction. As a result, when the image captured by the lens having the long focal distance f and the image captured at the high resolution have the same image quality score lq, it is possible to preferentially search the high image quality region captured by the real camera 70 at the higher resolution when searching for the camera path Cp.

Furthermore, depending on the arrangement state of the plurality of 3D models 90M, the plurality of 3D models 90M may overlap when viewed from the virtual camera 72. Since it is not preferable that the camera path Cp passes through such a position, the camera path Cp may be searched for in a state where the installation position of the virtual camera 72 where the shielding occurs is removed. Note that the installation position of the virtual camera 72 where shielding occurs can be obtained by calculation from the installation position of each 3D model 90M.

Furthermore, it is explained that the virtual camera 72 can maintain high image quality as it moves away from the 3D model 90M in the same angle $\theta$ direction, but an upper limit value may be set for the distance between the 3D model 90M and the virtual camera 72 in order to increase the efficiency of the search for the camera path Cp.

The camera path display unit 93 (see FIG. 7) causes the display control unit 99 to display the camera path Cp generated by the camera path generation unit 92 on the liquid crystal display 54. Note that the display form of the camera path Cp is not limited. For example, the generated camera path Cp may be drawn in a three-dimensional space in which a plurality of 3D models 90M is disposed, or the camera path Cp may be drawn in the form of a three-view diagram.

Furthermore, the camera path generation unit 92 may generate a plurality of camera paths Cp. The plurality of generated camera paths Cp is displayed on the liquid crystal display 54 by the action of the camera path display unit 93 and the display control unit 99. Then, the operator of the information processing apparatus 10a selects one camera path Cp by the action of the camera path selection unit 94 (see FIG. 7). Specifically, when one camera path Cp is selected on the touch panel 50 by the action of the camera path selection unit 94 from among the plurality of camera paths Cp displayed on the liquid crystal display 54 by changing the display form of colors and the like, the one camera path Cp is selected by the action of the operation control unit 98 that has detected the selection operation.

[1-8. Description of camera path generation assist method]

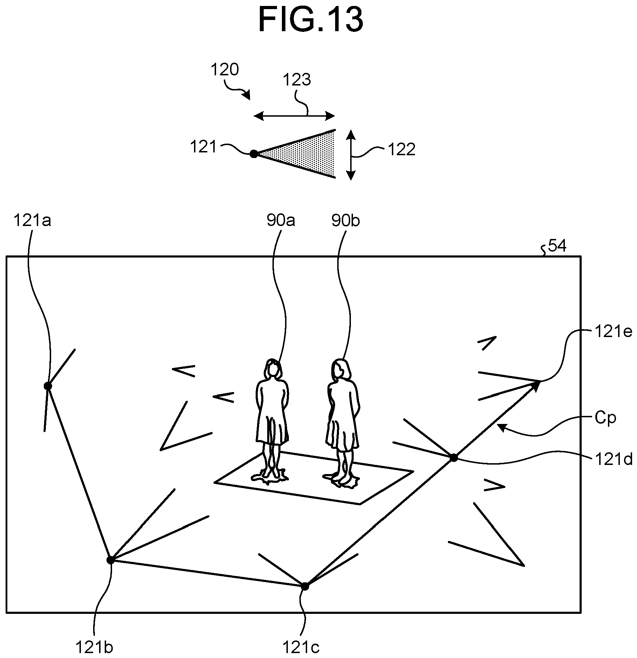

Next, a method of assisting the generation of the camera path Cp will be described with reference to FIG. 13. FIG. 13 is a first diagram illustrating an example of a user interface when generating a camera path.

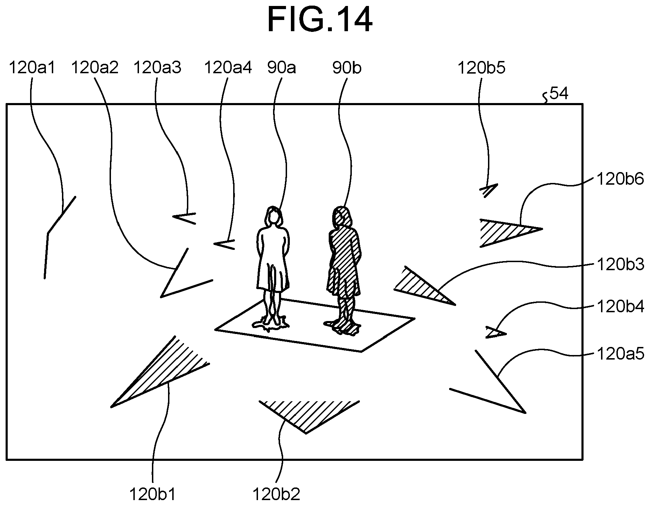

As described above, since the camera path Cp can be generated infinitely, it is desirable to impose some constraint conditions in order to efficiently generate the camera path Cp. Hereinafter, a user interface for efficiently generating the camera path Cp will be described with reference to FIGS. 13 and 14. FIG. 13 is a first diagram illustrating an example of a user interface for predicting a camera path. FIG. 14 is a second diagram illustrating an example of a user interface for predicting a camera path.

FIG. 13 illustrates an example in which the arrangement state of the plurality of subjects 90a and 90b, the arrangement state of the real cameras 70, and the imaging range 120 of each real camera 70 are displayed on the liquid crystal display 54.

As illustrated in FIG. 13, an imaging range 120 is information including an installation position 121 of the real camera, a range 122 (for example, it corresponds to the angular range $\theta a$ illustrated in FIG. 12) in which high image quality can be obtained, and a focal distance 123 of the real camera 70.

The operator of the information processing apparatus 10a can designate the camera path Cp by sequentially tracing the position of the real camera 70 on the liquid crystal display 54 on which the information illustrated in FIG. 13 is displayed. FIG. 13 illustrates an example in which the camera path Cp is set by sequentially tracing the installation position 121b, the installation position 121c, the installation position 121d, and the installation position 121e from the installation position 121a. By using such a method, since the arrangement of the real cameras 70 is clearly visualized, it is easy to intuitively generate the camera path Cp.

Note that, since the position of the real camera 70 can be moved back and forth, in FIG. 13, the real camera 70 can be traced in a direction closer to or away from the subjects 90a and 90b.

FIG. 14 illustrates an example in which the arrangement state of the plurality of subjects 90a and 90b, the arrangement state of the real camera 70, and the imaging range 120 of each real camera 70 are displayed on the liquid crystal display 54. The difference from FIG. 13 is that information indicating which subject is captured by the respective real cameras is added to the imaging range of the real camera 70.

Specifically, in FIG. 14, the 3D model of the subject 90a is generated by five real cameras 70 that image the respective imaging ranges 120a1, 120a2, 120a3, 120a4, and 120a5. In addition, it is indicated that the 3D model of the subject 90b is generated by six real cameras 70 that image the respective imaging ranges 120b1, 120b2, 120b3, 120b4, 120b5, and 120b6.

The operator of the information processing apparatus 10a can designate the camera path Cp by sequentially tracing the position of the real camera 70 on the liquid crystal display 54 on which the information illustrated in FIG. 14 is displayed. At this time, it is possible to designate one of the subject 90a and the subject 90b, that is, the camera path Cp focusing on a specific subject.

Note that the camera path Cp designated by the method illustrated in FIG. 13 or 14 may be passed to the camera path generation unit 92, and the camera path generation unit 92 may perform recalculation so that the designated camera path Cp is a camera path Cp with which the virtual image J with higher image quality can be obtained.

Then, the camera path Cp generated by the camera path generation unit 92 or the camera path Cp designated by the method illustrated in FIGS. 13 and 14 is passed to the rendering processing unit 95. Then, the rendering processing unit 95 performs rendering of the plurality of subjects 90 while moving the virtual viewpoint V along the camera path Cp, and generates the virtual image J. Then, the virtual image J subjected to the rendering process is displayed on the liquid crystal display 54 by the action of the display control unit 99.

[1-9. Description of flow of processing performed by camera path generation device]

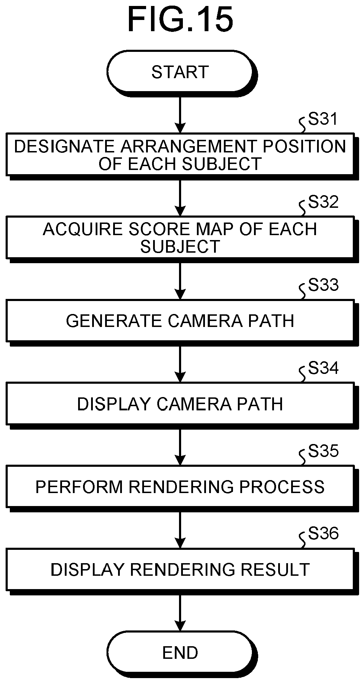

Next, a flow of the process performed by the camera path generation device 30 will be described with reference to FIG. 15. FIG. 15 is a flowchart illustrating an example of a flow of a process performed by the camera path generation device.

The 3D model arrangement designation unit 91 designates arrangement positions of the plurality of subjects 90 (step S31).

The camera path generation unit 92 acquires the score map $M(\theta, \phi)$ of each subject 90 from the 3D model generation device 20 (step S32).

The camera path generation unit 92 generates the camera path Cp that is a movement trajectory of the virtual viewpoint V and can maintain image quality equal to or higher than a predetermined value as much as possible (step S33). A specific method of generating the camera path Cp is as described above. Note that the camera path generation unit 92 may generate the camera path Cp so as to avoid a virtual viewpoint with coarse image quality or may change the camera path set by the user to the camera path Cp with which higher image quality can be obtained, in addition to generating the camera path Cp capable of maintaining (high) image quality equal to or higher than a predetermined value.

The camera path display unit 93 causes the display control unit 99 to display the camera path Cp on the liquid crystal display 54 (step S34).

The rendering processing unit 95 performs the rendering process on the subject 90 while moving the virtual viewpoint of the virtual camera 72 along the camera path Cp (step S35).

The rendering processing unit 95 further causes the display control unit 99 to display the result of the rendering process on the liquid crystal display 54 (step S36) .

As described above, according to the information processing apparatus 10a of the first embodiment, the score map generation unit 83 (image quality prediction unit) included in the information processing apparatus 10a predicts, for the 3D model 90M (3D object), the relationship between the position of the virtual viewpoint V from which the 3D model 90M is viewed and the image quality of the virtual image J obtained when the 3D model 90M is viewed from the position of the virtual viewpoint V.

As a result, it is possible to estimate and visualize the image quality of the virtual image J obtained when the 3D model 90M is imaged from an arbitrary direction.

Furthermore, according to the information processing apparatus 10a of the first embodiment, the camera path generation unit 92 (movement trajectory generation unit) generates the camera path Cp, which is the movement trajectory of the virtual viewpoint V, based on the arrangement positions of the plurality of 3D models 90M (3D objects) and the image quality of the virtual image J predicted by the score map generation unit 83 (image quality prediction unit) for each of the 3D models 90M.

As a result, when a plurality of 3D models 90M generated under different conditions is disposed in the same space, it is possible to simultaneously image the plurality of 3D models 90M and generate the camera path Cp in which the virtual image J with image quality as high as possible can be generated.

Furthermore, according to the information processing apparatus 10a of the first embodiment, the score map generation unit 83 (image quality prediction unit) predicts the image quality of the virtual image J based on the optical parameters (the number of pixels e, the size s of the image sensor, and the focal distance f) of the real camera 70 (imaging unit) used when generating the 3D model 90M (3D object) and the distance D between the real camera 70 and the 3D model 90M.

Thus, the image quality can be predicted by a simple operation.

Furthermore, according to the information processing apparatus 10a of the first embodiment, the optical parameter is a parameter related to the ratio of the 3D model 90M (3D object) to the image captured by the real camera 70 (imaging unit).

As a result, even when the signal format of the real camera 70 used when the 3D model 90M is generated is different, the image quality can be compared at the same scale.

Furthermore, according to the information processing apparatus 10a of the first embodiment, the direction in which the 3D model 90M (3D object) is viewed includes at least one of information indicating whether the real camera 70 (imaging unit) captures the 3D model 90M and information indicating whether the 3D model 90M is captured from the front.

As a result, the image quality can be predicted in consideration of the orientation of the 3D model 90M.

Furthermore, according to the information processing apparatus 10a of the first embodiment, the score map generation unit 83 (image quality prediction unit) generates the score map $M(\theta, \phi)$ (map) obtained by quantifying the parameter related to the image quality of the image obtained by imaging the 3D model 90M for each direction in which the 3D model 90M (3D object) is viewed.

This makes it possible to visualize the image quality in consideration of the imaging direction of the 3D model 90M.

Furthermore, according to the information processing apparatus 10a of the first embodiment, the score map generation unit 83 (image quality prediction unit) generates the score map $M(\theta, \phi)$ (map) by plotting the parameter related to the image quality of the digitized virtual image J at a position corresponding to the imaging position of the virtual image J and diffusing the plotted parameter related to the image quality of the virtual image J from the plotted position to the surroundings.

As a result, when the image quality of the virtual image J is predicted, it is possible to allow a deviation between the position of the real camera 70 and the position of the virtual camera 72.

Furthermore, according to the information processing apparatus 10a of the first embodiment, the score map generation unit 83 (image quality prediction unit) performs a smoothing operation on the image quality of the virtual image J plotted on the score map $M(\theta, \phi)$ (map) to diffuse the image quality to the surroundings.

As a result, the magnitude of the deviation between the position of the real camera 70 and the position of the virtual camera 72 can be determined by simple operation.

Furthermore, in the information processing apparatus 10a of the first embodiment, the 3D model 90M (3D object) has view dependent texture information.

As a result, since the texture changes according to the viewpoint position, rendering can be performed on the virtual image J with higher image quality.

Furthermore, in the information processing apparatus 10a of the first embodiment, the 3D model generation device 20 generates 3D models 90M (3D objects) of a plurality of subjects 90 independently.

As a result, it is possible to set the camera path Cp of the virtual camera 72 capable of imaging the plurality of subjects 90 with high image quality in a state where the plurality of subjects 90 exists.

(2. Second embodiment)

There is an effective method of using the score map $M(\theta, \phi)$ described above other than using it in the case of generating the camera path Cp. Hereinafter, other uses of the score map $M(\theta, \phi)$ will be described.

An information processing apparatus 10b according to the second embodiment of the present disclosure is an example of the information processing apparatus 10b that evaluates the generation condition of the 3D model 90M based on the score map $M(\theta, \phi)$ for the 3D model 90M of the subject 90 generated by the 3D model generation device 20 described in the first embodiment.

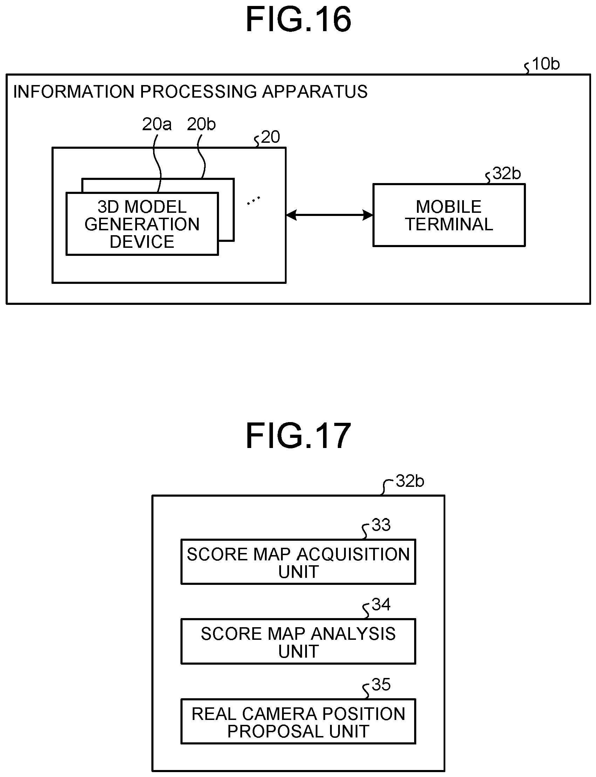

FIG. 16 is a block diagram illustrating an example of a basic configuration of an information processing apparatus according to the second embodiment. The information processing apparatus 10b includes a 3D model generation device 20 and a mobile terminal 32b.

The 3D model generation device 20 has the function same as that described in the first embodiment. Note that the 3D model generation device 20 described here includes a plurality of 3D model generation devices 20a, 20b, .... This assumes a case where different 3D model generation devices 20a, 20b, ... are placed at a plurality of different places. Each of the 3D model generation devices 20a, 20b, ... generates a 3D model 90M of the subject 90 and a score map M($\theta$, $\phi$). Then, the plurality of 3D models 90M and the score maps M($\theta$, $\phi$) generated in different places are connected via a communication line and transmitted to the mobile terminal 32b.

The mobile terminal 32b acquires the score map M($\theta$, $\phi$) generated by the 3D model generation devices 20a, 20b, .... Then, the mobile terminal 32b analyzes the score map M($\theta$, $\phi$) to evaluate the installation position of the real camera 70 when the 3D model 90M is generated. Then, the mobile terminal 32b outputs the evaluation result. Note that the mobile terminal 32b is, for example, a smartphone, a mobile PC, or the like.

Note that the hardware configuration of the 3D model generation device 20 is as described in the first embodiment. Further, the mobile terminal 32b has a general computer configuration.

FIG. 17 is a functional block diagram illustrating an example of a functional configuration of a mobile terminal according to the second embodiment. The mobile terminal 32b includes a score map acquisition unit 33, a score map analysis unit 34, and a real camera position proposal unit 35.

The score map acquisition unit 33 acquires the score map M($\theta$, $\phi$) from each of the 3D model generation devices 20a, 20b, ....

The score map analysis unit 34 evaluates an arrangement condition of the real camera 70 (imaging unit) used in generating the 3D model 90M (3D object) based on the score map M($\theta$, $\phi$) acquired from each of the 3D model generation devices 20a, 20b, .... Note that the score map analysis unit 34 is an example of an arrangement evaluation unit in the present disclosure.

The real camera position proposal unit 35 transmits the analysis results by the score map analysis unit 34 to the corresponding 3D model generation devices 20a, 20b, ....

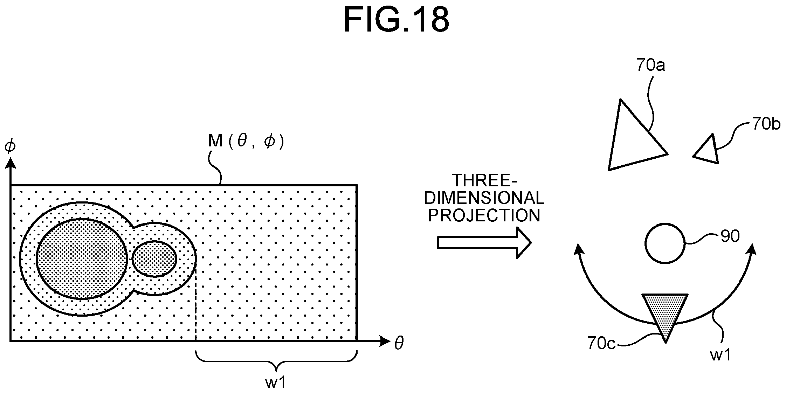

FIG. 18 is a diagram for explaining the operation of the mobile terminal according to the second embodiment. The mobile terminal 32b acquires the score map M($\theta$, $\phi$) illustrated in FIG. 18 from the 3D model generation device 20 (to be precise, any of the 3D model generation devices 20a, 20b, ...). As illustrated in FIG. 18, the score map M($\theta$, $\phi$) represents the image quality of the 3D model 90M generated in a state where the two real cameras 70a and 70b are disposed for the subject 90.

The score map analysis unit 34 refers to the score map M($\theta$, $\phi$) to analyze whether there is a region in which information is missing (that is, a region not covered by the real camera 70), whether there is a region with low image quality, or the like in the angle $\theta$ direction and the angle $\phi$ direction. In the example of FIG. 18, the score map analysis unit 34 determines that there is a region w1 in which information is missing in the angle $\theta$ direction. That is, as illustrated in FIG. 18, by installing a new real camera 70c in the region w1 in which information is missing and updating the 3D model 90M, the 3D model 90M covering a wider range can be generated.

Then, the real camera position proposal unit 35 transmits the analysis result to any of the 3D model generation devices 20a, 20b, ... that has transmitted the score map M($\theta$, $\phi$). The operator of the 3D model generation device receiving the analysis result updates the 3D model 90M according to the reception result.

As described above, according to the information processing apparatus 10b of the second embodiment, the score map analysis unit 34 (arrangement evaluation unit) evaluates the arrangement condition of the real camera 70 (imaging unit) used in generating the 3D model 90M(3D object) based on the score map M($\theta$, $\phi$) (map).

As a result, it is possible to easily and reliably evaluate the installation position of the real camera 70 when generating the 3D model 90M by visualizing the installation position by the score map M($\theta$, $\phi$).

(3. Third embodiment)

An information processing apparatus 10c (not illustrated) according to the third embodiment of the present disclosure includes a mobile terminal 32c (not illustrated) instead of the mobile terminal 32b in the information processing apparatus 10b described in the second embodiment. Note that the hardware configuration of the information processing apparatus 10c is the same as that of the information processing apparatus 10b.

The mobile terminal 32c included in the information processing apparatus 10c receives the 3D model 90M of the subject 90 generated by the 3D model generation device 20 described in the first embodiment. Then, the mobile terminal 32c performs rendering process on the 3D model 90M from the direction designated by the operator, and presents the reconstructed 3D model 90M. At this time, the mobile terminal 32c refers to the score map M($\theta$, $\phi$) and controls the display state so as to avoid browsing from a direction in which the image quality is low or a direction in which information is missing.

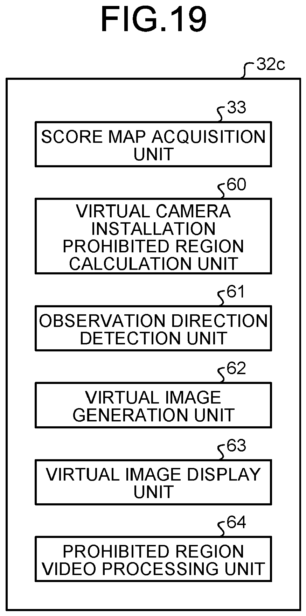

FIG. 19 is a functional block diagram illustrating an example of a functional configuration of a mobile terminal according to the third embodiment. The mobile terminal 32c includes a score map acquisition unit 33, a virtual camera installation prohibited region calculation unit 60, an observation direction detection unit 61, a virtual image generation unit 62, a virtual image display unit 63, and a prohibited region video processing unit 64.

The score map acquisition unit 33 acquires the score map M($\theta$, $\phi$) from each of the 3D model generation devices 20a, 20b, ....

The virtual camera installation prohibited region calculation unit 60 calculates a position (a direction indicated by coordinates ($\theta$, $\phi$)) where the virtual viewpoint V is not installed from the score map M($\theta$, $\phi$). Note that the position where the virtual viewpoint V is not installed is, for example, a region where information is missing (that is, a region not covered by the real camera 70) or a region with low image quality. Note that the virtual camera installation prohibited region calculation unit 60 is an example of a browsing prohibited region calculation unit in the present disclosure.

The observation direction detection unit 61 detects the rendering result instructed by the operator of the mobile terminal 32c, that is, the observation direction of the virtual image J. Specifically, although different depending on the operation system included in the mobile terminal 32c, for example, in a case where the observation direction is changed by changing the orientation of the mobile terminal 32c, the observation direction detection unit 61 detects the observation direction by monitoring the output of, for example, a gyro sensor included in the mobile terminal 32c. Furthermore, in a case where the observation direction is changed by swiping the screen of the mobile terminal 32c, the observation direction detection unit 61 detects the observation direction by monitoring the executed swipe operation.

The virtual image generation unit 62 generates a virtual image J viewed from the observation direction instructed by the operator of the mobile terminal 32c. Note that mobile terminal 32c performs rendering process on generated virtual image J.

The virtual image display unit 63 displays the virtual image J generated by the virtual image generation unit 62 on the display unit of the mobile terminal 32c.

The prohibited region video processing unit 64 does not generate the virtual image J of the 3D model 90M (3D object) when the observation direction detected by the observation direction detection unit 61 matches the virtual viewpoint V, that is, the position (a direction indicated by coordinates ($\theta$, $\phi$)) at which the virtual camera 72 is not installed, calculated by the virtual camera installation prohibited region calculation unit 60. Specifically, the virtual image J is not generated by fading out the display of the mobile terminal 32c, blurring the display of the mobile terminal 32c, applying an effect to the display of the mobile terminal 32c, or the like. By presenting such a video, the operator is guided to the observation direction in which the virtual viewpoint V at which the good virtual image J is generated can be set. Note that prohibited region video processing unit 64 is an example of a video processing unit according to the present disclosure.

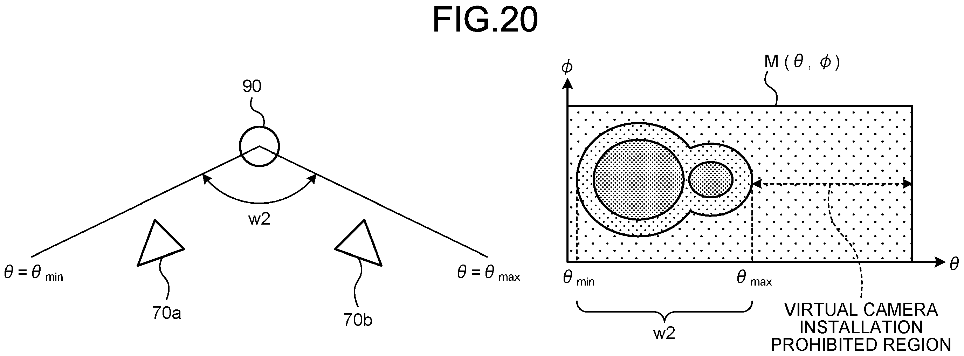

FIG. 20 is a diagram for explaining the operation of the mobile terminal according to the third embodiment. It is assumed that the score map M($\theta$, $\phi$) illustrated in FIG. 20 is obtained when the 3D model 90M of the subject 90 is created by the real cameras 70a and 70b. At this time, the virtual camera installation prohibited region calculation unit 60 analyzes the score map M($\theta$, $\phi$) to calculate the virtual camera installation prohibited region as a position (a direction indicated by coordinates ($\theta$, $\phi$)) where the virtual camera 72 is not installed. That is, the installation position of the virtual camera 72 is limited to the range (that is, the range from the angle $\theta$min to the angle $\theta$max) of a region w2 indicated in the score map M($\theta$, $\phi$).

When these pieces of information are reconstructed in the real space, the region w2 illustrated in FIG. 20 is limited to the installation position of the virtual camera 72, that is, the virtual viewpoint V.

As described above, according to the information processing apparatus 10c of the third embodiment, the virtual camera installation prohibited region calculation unit 60 (browsing prohibited region calculation unit) calculates the position where the virtual viewpoint V is not installed when generating the virtual image J from the 3D model 90M (3D object) based on the score map M($\theta$, $\phi$) (map). Then, when the virtual viewpoint V of the 3D model 90M matches the position of the virtual viewpoint V calculated by the virtual camera installation prohibited region calculation unit 60, the prohibited region video processing unit 64 (video processing unit) does not generate the virtual image J of the 3D model 90M from the position of the virtual viewpoint V.

As a result, it is possible to avoid setting the virtual viewpoint V at a position where the virtual image J cannot be generated or the image quality of the generated virtual image J is low.

(4. Fourth embodiment)

An information processing apparatus 10d (not illustrated) according to the fourth embodiment of the present disclosure includes a mobile terminal 32d (not illustrated) instead of the mobile terminal 32b in the information processing apparatus 10b described in the second embodiment. Note that the hardware configuration of the information processing apparatus 10d is the same as that of the information processing apparatus 10b.

The mobile terminal 32d included in the information processing apparatus 10d receives the 3D model 90M of the subject 90 generated by the 3D model generation device 20 described in the first embodiment. Then, the mobile terminal 32d generates a virtual image J when viewing the 3D model 90M from the virtual viewpoint V. When a CG object is further disposed in the virtual image J generated in this way, the mobile terminal 32d refers to the score map M($\theta$, $\phi$) and disposes the CG object intensively in a region with low image quality.

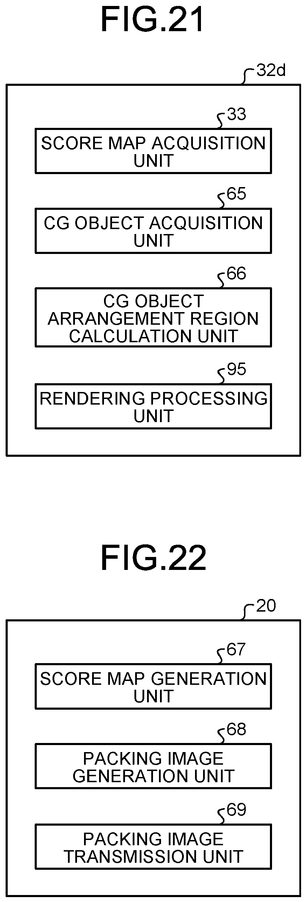

FIG. 21 is a functional block diagram illustrating an example of a functional configuration of a mobile terminal according to the fourth embodiment. The mobile terminal 32d includes a score map acquisition unit 33, a CG object acquisition unit 65, a CG object arrangement region calculation unit 66, and a rendering processing unit 95.

The score map acquisition unit 33 acquires the score map M(θ, φ) from each of the 3D model generation devices 20a, 20b, ....

The CG object acquisition unit 65 acquires the CG object to be disposed in the virtual image J from a server device (not illustrated) or the like.

The CG object arrangement region calculation unit 66 refers to the score map M(θ, φ) to calculate a region suitable for disposing the CG object. The region suitable for disposing the CG object is, for example, a region in which information is missing (that is, a region not covered by the real camera 70) or a region with low image quality. Note that the CG object arrangement region calculation unit 66 is an example of an arrangement position calculation unit in the present disclosure.

The rendering processing unit 95 performs rendering of the 3D model 90M viewed from the virtual viewpoint V and generates the virtual image J. Furthermore, the rendering processing unit 95 disposes the CG object in the virtual image J.

As described above, according to the information processing apparatus 10d of the fourth embodiment, the CG object arrangement region calculation unit 66 (arrangement position calculation unit) calculates an arrangement position at the time of disposing another image on the generated virtual image J based on the score map M(θ, φ) (map) .

As a result, in a case where another image is disposed on the virtual image J, it is possible not to disturb the 3D model 90M displayed with good image quality by intensively disposing the another image in a region with low image quality of the virtual image J.

(5. Fifth embodiment)

An information processing apparatus 10e (not illustrated) according to the fourth embodiment of the present disclosure is a device in which another function is added to the 3D model generation device 20 in the information processing apparatus 10b described in the second embodiment.

In a case where the 3D model 90M has a view dependent texture, it is necessary to transmit a plurality of images captured by the real camera 70 to a device that performs rendering. At this time, to reduce the amount of data to be transmitted as much as possible is an issue to be solved.

When transmitting a plurality of images of the subject 90 captured by the real camera 70 to the mobile terminal 32b, the 3D model generation device 20 included in the information processing apparatus 10e generates a packing image in which the plurality of images is stored in one image to transmit the packing image, thereby improving transmission efficiency. Specifically, the 3D model generation device 20 according to the present disclosure packs an image with high image quality in a larger size based on the score map M(θ, φ) generated by the 3D model generation device 20.

FIG. 22 is a functional block diagram illustrating an example of a functional configuration of a 3D model generation device according to the fifth embodiment. The 3D model generation device 20 includes a score map generation unit 67, a packing image generation unit 68, and a packing image transmission unit 69.

The score map generation unit 67 generates a score map M(θ, φ) of the generated 3D model 90M.

When generating a packing image in which a plurality of images of the subject 90 captured by the real camera 70 is stored in one image, the packing image generation unit 68 performs packing with higher resolution as the image quality is higher, based on the score map M(θ, φ). Note that the packing image generation unit 68 is an example of an image generation unit in the present disclosure.

The packing image transmission unit 69 transmits the packing image generated by the packing image generation unit 68 to the mobile terminal 32b.

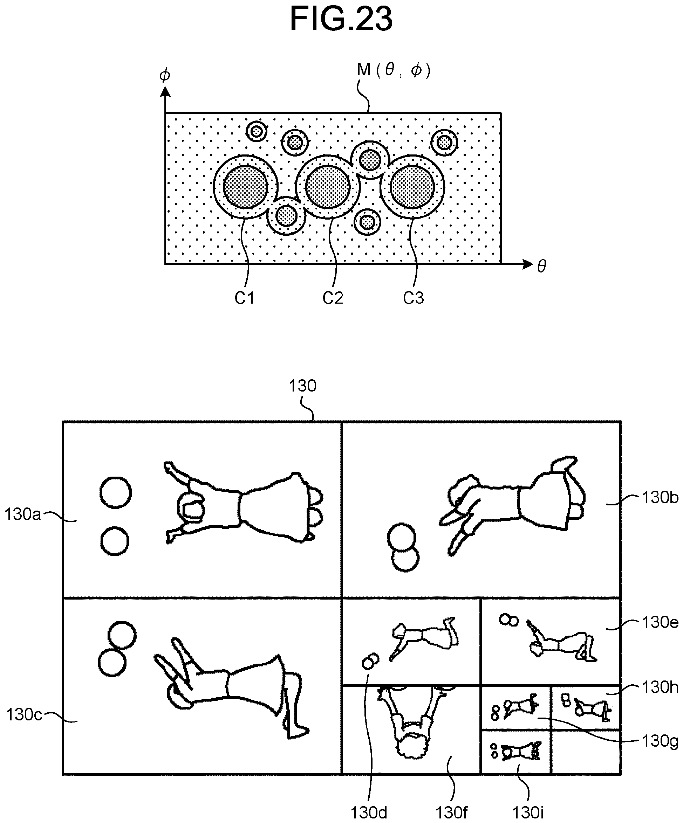

FIG. 23 is a diagram for explaining the operation of the 3D model generation device according to the fifth embodiment. It is assumed that the image quality of the images captured by the plurality of real cameras 70 is predicted to obtain the score map M(θ, φ) illustrated in the upper part of FIG. 23.

In M(θ, φ), it is found that clusters C1, C2, and C3 predicted to have high image quality are obtained. In such a case, when generating the packing image, the packing image generation unit 68 packs the images captured in the regions of the clusters C1, C2, and C3 with high resolution.

Specifically, as in a packing image 130 illustrated in FIG. 23, an image 130a captured in a region of the cluster C1, an image 130b captured in a region of the cluster C2, and an image 130c captured in a region of the cluster C3 are packed with high resolution. Note that, in order to perform packing in a state where the resolution is high, the size of the image is increased in the present embodiment. Then, the images (130d to 130i) other than these three images are packed with low resolution, that is, reduced size.

After receiving such a packing image 130, the mobile terminal 32b generates the virtual image J with high image quality and performs a rendering process in the regions of the clusters C1, C2, and C3 with high image quality. Furthermore, in a region other than the clusters C1, C2, and C3, it generates a virtual image J having image quality corresponding to the image stored in the received packing image 130, and performs the rendering process.

As described above, according to the 3D model generation device 20 of the fifth embodiment, when generating the packing image 130 in which a plurality of images obtained by imaging the 3D model 90M (3D object) is stored in one image, the packing image generation unit 68 (image generation unit) performs packing with a larger size, that is, with a higher resolution, as the image quality is higher, based on the score map $M(\theta, \phi)$ (map).

As a result, the transmission efficiency of the 3D model 90M having a view dependent texture can be improved.

Note that, the effects in each embodiment described in the present specification are merely examples and are not limited, and other effects may be present. Furthermore, the embodiment of the present disclosure is not limited to the above-described embodiments, and various modifications can be made without departing from the gist of the present disclosure.

For example, the present disclosure can also have the following configurations.

(1) An information processing apparatus comprising:
an image quality prediction unit that predicts, for a 3D object, a relationship between a position of a virtual viewpoint from which a 3D object is viewed and image quality of a virtual image obtained when the 3D object is viewed from the position of the virtual viewpoint.

(2) The information processing apparatus according to (1), further comprising:
a movement trajectory generation unit that generates a movement trajectory of the virtual viewpoint based on arrangement positions of a plurality of 3D objects and image quality of the virtual image predicted by the image quality prediction unit for each of the 3D objects.

(3) The information processing apparatus according to (1) or (2), wherein

the image quality prediction unit
predicts the image quality based on an optical parameter of an imaging unit used in generating the 3D object and a distance between the imaging unit and the 3D object.

(4) The information processing apparatus according to (3), wherein
the optical parameter is a parameter related to a ratio of the 3D object to an image captured by the imaging unit.

(5) The information processing apparatus according to (3) or (4), wherein
a direction in which the 3D object is viewed includes at least one of information indicating whether the imaging unit captures the 3D object and information indicating whether the imaging unit captures the 3D object from a front.

(6) The information processing apparatus according to any one of (1) to (5), wherein

the image quality prediction unit
generates, for the 3D object, a map in which a parameter related to image quality of an image obtained by imaging the 3D object are quantified for each direction in which the 3D object is viewed.

(7) The information processing apparatus according to any one of (1) to (6), wherein

the image quality prediction unit
plots the quantified parameter related to image quality of the digitized image at a position corresponding to an imaging position of the image, and
generates the map by diffusing the plotted parameter related to image quality of the plotted image from a plotted position to surroundings.

(8) The information processing apparatus according to (7), wherein
the image quality prediction unit performs a smoothing operation on image quality of the image plotted on the map to diffuse the image quality to surroundings.

(9) The information processing apparatus according to any one of (1) to (8), wherein
the 3D object has view dependent texture information.

(10) The information processing apparatus according to any one of (6) to (9), further comprising:
an arrangement evaluation unit that evaluates an arrangement condition of an imaging unit used in generating the 3D object based on the map.

(11) The information processing apparatus according to any one of (6) to (9), further comprising:

a browsing prohibited region calculation unit that calculates a position where a virtual viewpoint is not set when a virtual image is generated from the 3D object based on the map; and
a video processing unit that does not generate, when a virtual viewpoint of the 3D object matches a position of a virtual viewpoint calculated by the browsing prohibited region calculation unit, a virtual image of the 3D object from the position of the virtual viewpoint.

(12) The information processing apparatus according to any one of (6) to (9), further comprising:
an arrangement position calculation unit that calculates an arrangement position when another image is disposed in the generated virtual image based on the map.

(13) The information processing apparatus according to any one of (6) to (9), further comprising:
an image generation unit that performs packing with a higher resolution for an image with a higher image quality based on the map when generating a packing image in which a plurality of images obtained by imaging the 3D object is stored in one image.

(14) The information processing apparatus according to any one of (2) to (13), wherein
the plurality of 3D objects is generated independently.

(15) A video generation method comprising:

predicting, for a 3D object, a relationship between a position of a virtual viewpoint from which a 3D object is viewed and image quality of a virtual image obtained when the 3D object is viewed from the position of the virtual viewpoint; and

generating a video image based on a movement trajectory of the virtual viewpoint generated using a relationship between an arrangement position of the 3D object and image quality of the virtual image.

(16) A program causing a computer to function as
an image quality prediction unit that predicts, for a 3D object, a relationship between a position of a virtual viewpoint from which a 3D object is viewed and image quality of a virtual image obtained when the 3D object is viewed from the position of the virtual viewpoint.

Reference Signs List

10a INFORMATION PROCESSING APPARATUS
20 3D MODEL GENERATION DEVICE
30 CAMERA PATH GENERATION DEVICE
32b MOBILE TERMINAL
34 SCORE MAP ANALYSIS UNIT (ARRANGEMENT EVALUATION UNIT)
60 VIRTUAL CAMERA INSTALLATION PROHIBITED REGION CALCULATION UNIT (BROWSING PROHIBITED REGION CALCULATION UNIT)
64 PROHIBITED REGION VIDEO PROCESSING UNIT (VIDEO PROCESSING UNIT)
66 CG OBJECT ARRANGEMENT REGION CALCULATION UNIT (ARRANGEMENT POSITION CALCULATION UNIT)
70, 70a, 70b, 70c, 70d, 70e REAL CAMERA (IMAGING UNIT IMAGING DEVICE)
72, 72a, 72b, 72c, 72d VIRTUAL CAMERA
83 SCORE MAP GENERATION UNIT (IMAGE QUALITY PREDICTION UNIT)
90, 90a, 90b SUBJECT
90M, 90Ma, 90Mb 3D MODEL (3D OBJECT)
91 3D MODEL ARRANGEMENT DESIGNATION UNIT
92 CAMERA PATH GENERATION UNIT (MOVEMENT TRAJECTORY GENERATION UNIT)
93 CAMERA PATH DISPLAY UNIT
Cp CAMERA PATH
D DISTANCE
e NUMBER OF PIXELS
f FOCAL DISTANCE
h SUBJECT SIZE
Iq IMAGE QUALITY SCORE
J, J1, J2 VIRTUAL IMAGE
M($\theta$, $\phi$) SCORE MAP (MAP)
p IMAGE SIZE
s SIZE OF IMAGE SENSOR
V, V1, V2 VIRTUAL VIEWPOINT

**Claims**

1. An information processing apparatus comprising:
an image quality prediction unit that predicts, for a 3D object, a relationship between a position of a virtual viewpoint from which a 3D object is viewed and image quality of a virtual image obtained when the 3D object is viewed from the position of the virtual viewpoint.

2. The information processing apparatus according to claim 1, further comprising:
a movement trajectory generation unit that generates a movement trajectory of the virtual viewpoint based on arrangement positions of a plurality of 3D objects and image quality of the virtual image predicted by the image quality prediction unit for each of the 3D objects.

3. The information processing apparatus according to claim 1, wherein

the image quality prediction unit
predicts the image quality based on an optical parameter of an imaging unit used in generating the 3D object and a distance between the imaging unit and the 3D object.

4. The information processing apparatus according to claim 3, wherein
the optical parameter is a parameter related to a ratio of the 3D object to an image captured by the imaging unit.

5. The information processing apparatus according to claim 3, wherein
a direction in which the 3D object is viewed includes at least one of information indicating whether the imaging unit captures the 3D object and information indicating whether the imaging unit captures the 3D object from a front.

6. The information processing apparatus according to claim 1, wherein

the image quality prediction unit
generates, for the 3D object, a map in which a parameter related to image quality of an image obtained by imaging the 3D object are quantified for each direction in which the 3D object is viewed.

7. The information processing apparatus according to claim 6, wherein

the image quality prediction unit
plots the quantified parameter related to image quality of the digitized image at a position corresponding to an imaging position of the image, and
generates the map by diffusing the plotted parameter related to image quality of the plotted image from a plotted position to surroundings.

8. The information processing apparatus according to claim 7, wherein
the image quality prediction unit performs a smoothing operation on image quality of the image plotted on the map to diffuse the image quality to surroundings.

9. The information processing apparatus according to claim 1, wherein
the 3D object has view dependent texture information.

10. The information processing apparatus according to claim 6, further comprising:
an arrangement evaluation unit that evaluates an arrangement condition of an imaging unit used in generating the 3D object based on the map.

11. The information processing apparatus according to claim 6, further comprising:

a browsing prohibited region calculation unit that calculates a position where a virtual viewpoint is not set when a virtual image is generated from the 3D object based on the map; and
a video processing unit that does not generate, when a virtual viewpoint of the 3D object matches a position of a virtual viewpoint calculated by the browsing prohibited region calculation unit, a virtual image of the 3D object from the position of the virtual viewpoint.

**12.** The information processing apparatus according to claim 6, further comprising:
an arrangement position calculation unit that calculates an arrangement position when another image is disposed in the generated virtual image based on the map.

**13.** The information processing apparatus according to claim 6, further comprising:
an image generation unit that performs packing with a higher resolution for an image with a higher image quality based on the map when generating a packing image in which a plurality of images obtained by imaging the 3D object is stored in one image.

**14.** The information processing apparatus according to claim 2, wherein
the plurality of 3D objects is generated independently.

**15.** A video generation method comprising:

predicting, for a 3D object, a relationship between a position of a virtual viewpoint from which a 3D object is viewed and image quality of a virtual image obtained when the 3D object is viewed from the position of the virtual viewpoint; and
generating a video image based on a movement trajectory of the virtual viewpoint generated using a relationship between an arrangement position of the 3D object and image quality of the virtual image.

**16.** A program causing a computer to function as
an image quality prediction unit that predicts, for a 3D object, a relationship between a position of a virtual viewpoint from which a 3D object is viewed and image quality of a virtual image obtained when the 3D object is viewed from the position of the virtual viewpoint.

# FIG.1

INFORMATION PROCESSING APPARATUS ⸦10a

| 3D MODEL GENERATION DEVICE ⸦20 | → | CAMERA PATH GENERATION DEVICE ⸦30 |

# FIG.2

IMAGING

3D MODELING

PLAYBACK, DISPLAY

70b

70a

90

70c

90M

80

84(I)

90M

70a
70b
70c
} 70

EP 4 012 664 A1

# FIG.3

# FIG.4

# FIG.5

START

S11
SET VIRTUAL VIEWPOINT

S12
CALCULATE POSITIONAL
RELATIONSHIP BETWEEN 3D MODEL
AND VIRTUAL VIEWPOINT

S13
SELECT REAL CAMERA TO BE USED
FOR RENDERING

S14
SORT REAL CAMERAS SELECTED IN
ORDER OF PROXIMITY FROM VIRTUAL
VIEWPOINT

S15
WEIGHTS ARE SEQUENTIALLY GIVEN
TO REAL CAMERAS STARTING FROM
REAL CAMERA CLOSEST TO VIRTUAL
VIEWPOINT, AND RENDERING
PROCESS IS PERFORMED

END

# FIG.6

10a

```
CPU (40)    ROM (41)    RAM (42)
```

(45)

STORAGE UNIT (43)

INPUT/OUTPUT CONTROLLER (44)

CONTROL PROGRAM (P1)

3D MODEL (90M)

SCORE MAP ($M(\theta, \phi)$)

CAMERA PATH (Cp)

TOUCH PANEL INTERFACE (46)

DISPLAY INTERFACE (47)

CAMERA INTERFACE (48)

TOUCH PANEL (50)

LIQUID CRYSTAL DISPLAY (54)

REAL CAMERA (70)

# FIG.7

10a

## 3D MODEL GENERATION DEVICE — 20

### IMAGING CONTROL UNIT — 81

### 3D MODEL GENERATION UNIT — 82

### SCORE MAP GENERATION UNIT — 83

## CAMERA PATH GENERATION DEVICE — 30

### 3D MODEL ARRANGEMENT DESIGNATION UNIT — 91

### CAMERA PATH GENERATION UNIT — 92

### CAMERA PATH DISPLAY UNIT — 93

### CAMERA PATH SELECTION UNIT — 94

### RENDERING PROCESSING UNIT — 95

### OPERATION CONTROL UNIT — 98

### DISPLAY CONTROL UNIT — 99

# FIG.8

# FIG.9

| REAL CAMERA | RESOLUTION | | FOCAL DISTANCE f (mm) | SIZE s (mm) OF IMAGE SENSOR (VERTICAL DIRECTION) | DISTANCE D (m) | FACE IS SHOWN | FOCUS | IMAGE QUALITY SCORE Iq |
|---|---|---|---|---|---|---|---|---|
| | SIGNAL FORM | NUMBER OF PIXELS e (VERTICAL DIRECTION) | | | | | | |
| 70a | 4K | 2160 | 100 | 24.0 | 2 | Yes | 100 POINTS | 6750 |
| 70b | 4K | 2160 | 50 | 24.0 | 2 | Yes | 50 POINTS | 1688 |
| 70c | FULL HD | 1080 | 50 | 15.8 | 1 | No | 100 POINTS | 0 |

(SUBJECT SIZE: h=1.5m)

EP 4 012 664 A1

# FIG.10

CAMERA LAYOUT
(TOP VIEW)

CAMERA LAYOUT
(SIDE VIEW)

EP 4 012 664 A1

# FIG.11

EP 4 012 664 A1

S21
CALCULATE IMAGE QUALITY SCORE FOR EACH REAL CAMERA

S22
DISPOSE IMAGE QUALITY SCORE ON $(\theta, \phi)$ PLANE

S23
GENERATE SCORE MAP BY DIFFUSING IMAGE QUALITY SCORE TO SURROUNDINGS

S24
INTEGRATE SCORE MAP OF ALL REAL CAMERAS

REAL CAMERA 70a

REAL CAMERA 70b

REAL CAMERA 70c

$Ma(\theta, \phi)$

$Mb(\theta, \phi)$

$Mc(\theta, \phi)$

$M(\theta, \phi)$

HIGH IMAGE QUALITY

LOW IMAGE QUALITY

# FIG.12

Cp

112

72d

72c

θa

θb

110

72a

COVER BOTH
SUBJECTS AGAIN

72b

CAPTURE ONLY
SUBJECT 90a

θ1

COVER BOTH
SUBJECTS

90Ma
(90a)

90Mb
(90b)

$Ma(\theta, \phi)$

C1

$Mb(\theta, \phi)$

$\phi$

$\phi$

θ1

θ

θ

θa

θb

# FIG.13

# FIG.14

# FIG.15

START

S31
DESIGNATE ARRANGEMENT POSITION OF EACH SUBJECT

S32
ACQUIRE SCORE MAP OF EACH SUBJECT

S33
GENERATE CAMERA PATH

S34
DISPLAY CAMERA PATH

S35
PERFORM RENDERING PROCESS

S36
DISPLAY RENDERING RESULT

END

# FIG.16

INFORMATION PROCESSING APPARATUS ⌇10b

20a  20b  ⌇20

3D MODEL
GENERATION
DEVICE

⟷

MOBILE
TERMINAL ⌇32b

# FIG.17

⌇32b

SCORE MAP ACQUISITION
UNIT ⌇33

SCORE MAP ANALYSIS
UNIT ⌇34

REAL CAMERA POSITION
PROPOSAL UNIT ⌇35

# FIG.18

EP 4 012 664 A1

# FIG.19

32c

33
SCORE MAP ACQUISITION UNIT

60
VIRTUAL CAMERA INSTALLATION PROHIBITED REGION CALCULATION UNIT

61
OBSERVATION DIRECTION DETECTION UNIT

62
VIRTUAL IMAGE GENERATION UNIT

63
VIRTUAL IMAGE DISPLAY UNIT

64
PROHIBITED REGION VIDEO PROCESSING UNIT

# FIG.20

EP 4 012 664 A1

# FIG.21

32d

| SCORE MAP ACQUISITION UNIT | 33 |

| CG OBJECT ACQUISITION UNIT | 65 |

| CG OBJECT ARRANGEMENT REGION CALCULATION UNIT | 66 |

| RENDERING PROCESSING UNIT | 95 |

# FIG.22

20

| SCORE MAP GENERATION UNIT | 67 |

| PACKING IMAGE GENERATION UNIT | 68 |

| PACKING IMAGE TRANSMISSION UNIT | 69 |

# FIG.23

## INTERNATIONAL SEARCH REPORT

| International application No. |
|---|
| PCT/JP2020/026809 |

**A. CLASSIFICATION OF SUBJECT MATTER**
Int.Cl. G06T19/00(2011.01)i, G06T7/41(2017.01)i
FI: G06T19/00A, G06T7/41

According to International Patent Classification (IPC) or to both national classification and IPC

**B. FIELDS SEARCHED**

Minimum documentation searched (classification system followed by classification symbols)
Int.Cl. G06T19/00, G06T7/41

Documentation searched other than minimum documentation to the extent that such documents are included in the fields searched
| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2019-145894 A (CANON INC.) 29.08.2019 (2019-08-29), paragraphs [0002], [0013]-[0033], [0037]-[0053], fig. 2, 14 | 1-4, 9, 14-16<br>5-8, 10-13 |
| A | JP 2019-102907 A (CANON INC.) 24.06.2019 (2019-06-24), fig. 2, 9, 10 | 1-16 |
| A | JP 2013-38602 A (SONY CORPORATION) 21.02.2013 (2013-02-21), paragraphs [0048]-[0052], [0061]-[0064] | 1-16 |
| P, X | JP 2019-191915 A (CANON INC.) 31.10.2019 (2019-10-31), paragraphs [0010]-[0015], [0044], [0045], [0067]-[0069], fig. 4 | 1, 2, 9, 14-16 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20.08.2020 | 01.09.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.

PCT/JP2020/026809

```
JP 2019-145894 A    29.08.2019    (Family: none)

JP 2019-102907 A    24.06.2019    US 2019/0163356 A1
                                  fig. 2, 9, 10

JP 2013-38602 A     21.02.2013    US 2013/0038606 A1
                                  paragraphs [0113]-[0127], [0156]-[0172]
                                  CN 102932657 A

JP 2019-191915 A    31.10.2019    US 2019/0335154 A1
                                  paragraphs [0014]-[0019], [0051], [0052],
                                  [0074]-[0076], fig. 4
```

Form PCT/ISA/210 (patent family annex) (January 2015)

**EP 4 012 664 A1**

**REFERENCES CITED IN THE DESCRIPTION**

**Patent documents cited in the description**

- JP 4671873 B